# EUROPÄISCHE PATENTANMELDUNG

(11) **EP 2 665 034 A2**
(43) Veröffentlichungstag der Anmeldung: **20.11.2013**
(21) Anmeldenummer: 13180158.1
(22) Anmeldetag: 19.02.2010
(51) Int. Cl.: G06T 5/00, G06T 11/00

(54) **Verfahren zum Messen eines Objekts**

(30) Priorität: 20.02.2009 DE 102009003514; 10.03.2009 DE 102009003597; 24.04.2009 DE 102009003826; 20.05.2009 DE 102009025846; 17.07.2009 DE 102009026198; 24.08.2009 DE 102009043838; 09.11.2009 DE 102009044476; 18.11.2009 DE 102009044580
(62) Teilanmeldung aus: 10708956.7
(71) Anmelder: Werth Messtechnik GmbH, 35394 Giessen (DE)
(72) Erfinder: Christoph, Ralf, Dr., 35394 Gießen (DE); Schmidt, Ingomar, Dr., 35418 Buseck (DE); Hammer, Michael, 35447 Reiskirchen (DE); Wiedenhöfer, Thomas, 35415 Pohlheim-Holzheim (DE)
(74) Vertreter: Stoffregen, Hans-Herbert

(57) **Zusammenfassung**

Die Erfindung bezieht sich auf ein Verfahren zur Korrektur von Projektionsdaten für eine CT-Rekonstruktion, wobei bei einer Messung ein zu messendes Werkstück zwischen einer Röntgenstrahlung emittierenden Röntgenquelle und einem die Röntgenstrahlung empfangenden Röntgendetektor angeordnet wird. Um mit geringem messtechnischen Aufwand und grundsätzlich ohne Verwendung von Kalibrierkörpern die Projektionsdaten korrigieren zu können, wird vorgeschlagen, dass während des Messablaufes auftretende Relativ-Bewegungen zwischen der Röntgenquelle und dem Röntgendetektor durch vorab gewonnene Informationen korrigiert werden.

## Beschreibung

Die Erfindung bezieht sich auf ein Verfahren zur Korrektur von Projektionsdaten für eine CT-Rekonstruktion, wobei bei einer Messung ein zu messendes Werkstück zwischen einer Röntgenstrahlung emittierenden Röntgenquelle und einem die Röntgenstrahlung empfangenden Röntgendetektor angeordnet wird.

Die Erfindung bezieht sich auch auf ein Verfahren zur Bestimmung von Strukturen und/oder Geometrie eines Objektes bzw. zum Messen eines Objektes wie Werkstück mittels eines Messsystems, vorzugsweise computertomographischen Messsystems und zur Korrektur von Projektionsdaten für eine CT-Rekonstruktion unter Verwendung eines CT-Detektors mit Pixeln. Bei der CT-Messung eines Werkstücks wird dieses zwischen einer Röntgenstrahlung emittierenden Röntgenquelle und einem die Röntgenstrahlung empfangenden Röntgendetektor auf einer Drehachse angeordnet. Auch nimmt die Erfindung Bezug auf eine Anordnung zur Bestimmung von Strukturen und/oder Geometrie eines Objektes mittels eines Messsystems, vorzugsweise computertomographischen Messsystems, bestehend aus zumindest einer Strahlungsquelle, zumindest einem Strahlungsdetektor und zumindest einer Drehachse.

Eine weitere Voraussetzung der Nutzung der Computertomografie zu messtechnischen Zwecken mit hoher Genauigkeit ist, dass die zur Rekonstruktion dienenden Durchstrahlungsbilder in den verschiedenen Drehstellungen des Werkstücks eindeutig im Raum zueinander zugeordnet werden können. Dies wird jedoch zwangsläufig durch Taumelbewegungen bei der Drehung des Messobjektes oder Verlagerungen zwischen der Röntgenröhre, insbesondere des Brennflecks der Röntgenröhre, und dem Röntgendetektor erschwert. Beide Einflussgrößen können durch besonders stabilen thermischen wie auch mechanischen Aufbau der einzelnen Komponenten verkleinert werden. Zudem werden hochgenaue Drehachsen für die Drehung des Messobjektes eingesetzt, beziehungsweise auftretende Taumelbewegungen bestimmt und korrigiert. Unter anderem durch Erwärmung der Röntgenröhre auftretende Driftbewegungen des Brennflecks der Röntgenröhre werden momentan verringert, in dem ein entsprechendes Aufheizen und damit Einlaufen der CT-Anlage abgewartet werden muss. Des Weiteren sind Verfahren bekannt, bei denen ein fest angeordneter zusätzlicher Messkörper in den Röntgenstrahlengang eingebracht wird, anhand dessen Abbildung auf dem CT-Detektor die Drift des Brennflecks korrigiert werden kann.

Einem Aspekt der vorliegenden Erfindung liegt die Aufgabe zugrunde, ein Verfahren der eingangs genannten Art so weiterzubilden, dass mit geringem messtechnischen Aufwand und grundsätzlich ohne Verwendung von Kalibrierkörpern die Projektionsdaten korrigiert werden können.

Zur Lösung der Aufgabe sieht die Erfindung im Wesentlichen vor, dass während des Messablaufs auftretende Relativ-Bewegung zwischen der Röntgenquelle und dem Röntgendetektor durch vorab gewonnene Informationen korrigiert werden.

Dabei wird insbesondere vorgeschlagen, dass als Vorab-Information ein Durchstrahlungsbild des zu messenden Werkstücks oder mehrere Durchstrahlungsbilder des zu messenden Werkstücks in verschiedenen Drehstellungen und/oder verschiedenen Positionen bezüglich der Röntgenquelle und/oder des Röntgendetektors aufgenommen werden.

Erfindungsgemäß erfolgt eine Korrektur anhand von vorab aufgenommenen Durchstrahlungsbildern deutlich geringerer Anzahl als zur Messung verwendete Durchstrahlungsbilder direkt am gleichen Messobjekt.

Es wird ein Verfahren zur Korrektur der während der CT-Messung auftretenden Verlagerungen zwischen der Röntgenquelle bzw. dem Brennfleck der Röntgenquelle und dem Röntgendetektor bzw. dem Werkstück vorgeschlagen. Dazu werden zunächst ein oder mehrere Vorab-Durchstrahlungsbilder des Werkstücks oder Teile des Werkstückes wie beispielsweise einzelne Merkmale aufgenommen. Um Drifterscheinungen bei den Vorab-Aufnahmen zu minimieren, werden nur einige wenige Durchstrahlungsbilder in den wenigen verschiedenen Drehstellung aufgenommen. Durch den Vergleich zwischen den vorab aufgenommenen Durchstrahlungsbildern bzw. Teilen davon und den während der Messung aufgenommenen Durchstrahlungsbildern, bzw. Teilen davon, können zum Beispiel mit Hilfe von Korrelationsverfahren eine Verschiebung oder Skalierungsabweichungen erkannt und korrigiert werden. Dies kann z.B. durch Re-Sampling-Verfahren oder Positionierung der Röntgenquelle relativ zum Röntgendetektor und/oder dem Werkstück erfolgen. Die zur Messung eingesetzten Durchstrahlungsbilder, für die kein Vorab-Durchstrahlungsbild vorliegt, werden mit Hilfe von Interpolations-Verfahren aus vorab aufgenommenen Durchstrahlungsbildern benachbarter Drehstellungen des Werkstücks korrigiert.

Der Vorteil der beschriebenen Vorgehensweise liegt in der Einsparung von fest anzubringenden zusätzlichen Durchstrahlungskörpern zur Bestimmung der Drift des Brennflecks, da auch diese Driftkörper Drifterscheinungen während der Messung unterliegen und zudem den Messbereich der CT-Anlage einschränken können. Aufgrund der geringen Anzahl von vorab aufzunehmenden Durchstrahlungsbildern zur Korrektur der bei der eigentlichen Messung bestimmten Durchstrahlungsbilder tritt bei den Vorab-Aufnahmen eine sehr geringe Messzeit auf, wodurch Drifterscheinungen des Brennfleckes minimiert werden. Im Vergleich zur eigentlichen Messung, bei der zwischen ca. 100 - 1600 Durchstrahlungsbilder über ein Voll- oder Halbkreis verteilt werden, werden Vorab-Durchstrahlungsbilder nur in gegebenenfalls auch ungleichmäßig verteilten Schritten von ca. 5° bis 20° Grad aufgenommen. Ebenso kann eine Korrektur der Drift auch anhand eines einzelnen Durchstrahlungsbildes erzeugt werden, indem beispielsweise am Anfang und Ende, aber auch zu jedem weiteren beliebigen Zeitpunkt während der Messung ein Durchstrahlungsbild in dieser Position wiederholt bestimmt wird.

Daher ist insbesondere vorgesehen, dass die Anzahl der vorab aufgenommenen Durchstrahlungsbilder deutlich geringer ist, typischerweise 20 bis 70, als die Anzahl der zur Messung benötigten Durchstrahlungsbilder, typischerweise100 bis 1.600.

In Ausgestaltung der Erfindung ist vorgesehen, dass die Korrektur anhand des einen vorab aufgenommen Durchstrahlungsbildes erfolgt, indem an einem oder mehreren beliebig während des Messablaufes wählbaren Zeitpunkten eine erneute Messung des zu messenden Werkstücks in der Drehstellung und Position erfolgt, in der die Vorab-Aufnahme ermittelt wurde.

Die Erfindung zeichnet sich auch dadurch aus, dass die Ermittlung der Korrekturdaten für die einzelnen zur Messung verwendeten Durchstrahlungsbilder durch Vergleich, zum Beispiel mit Hilfe von Korrelationsmethoden, mit den vorab aufgenommenen Durchstrahlungsbildern, und auf dem Vergleich basierender Verschiebung und/oder Skalierung, vorzugsweise durch Re-Sampling-Verfahren, der einzelnen zur Messung verwendeten Durchstrahlungsbilder, Teilen dieser Durchstrahlungsbilder oder einem oder mehreren Merkmalen innerhalb dieser Durchstrahlungsbilder erfolgt.

Es besteht auch die Möglichkeit, dass Durchstrahlungsbilder, für die kein Vorab-Durchstrahlungsbild in der gleichen Drehstellung des Werkstückes vorliegt, dadurch korrigiert werden, dass die Informationen aus Vorab-Durchstrahlungsbildern verwendet werden, welche in benachbarten Drehstellungen aufgenommen wurden, vorzugsweise durch den Einsatz von Interpolations-Verfahren.

In Ausgestaltung der Erfindung wird vorgeschlagen, dass die auf dem Vergleich der vorab bestimmten Durchstrahlungsbilder und der zur Messung verwendeten Durchstrahlungsbilder basierende Verschiebung und/oder Skalierung verwendet wird, um die relative Position zwischen der Röntgenquelle und/oder dem Röntgendetektor und/oder dem Werkstück während des Messlaufes durch Positionieren zu korrigieren.

Insbesondere ist vorgesehen, dass das Korrekturverfahren für ein CT-Messsystem Verwendung findet, das Teil eines Koordinatenmessgerätes ist. Hierbei handelt es sich insbesondere um ein Multisensor-Koordinatenmessgerät.

Die Nutzung der Computertomografie zu messtechnischen Zwecken kann nur dann mit hoher Genauigkeit erfolgen, wenn die rekonstruierten Tomogramme frei von Artefakten sind, welche durch verschiedene physikalische Effekte verursacht werden. Diese physikalischen Effekte sind u. a. die Strahlaufhärtung, die Streuung, aber auch Beugungs- und Brechungseffekte. Zur Korrektur der aus diesen entstehenden Artefakte wird zumeist eine Kennlinie berechnet, welche den Zusammenhang zwischen der durchstrahlten Länge bzw. auch der Geometrie des Bauteiles und den mit einem Detektor gemessenen Schwächungswerten berücksichtigt.

Die EP 1415179 B1 beschreibt ein Verfahren, bei dem die Durchstrahlungslängen aus den aus vollständigen Projektionsdaten hervorgehenden artefaktbehafteten 3D-Voxeldaten eines Prüflings iterativ ermittelt werden. Sämtliche dabei ermittelten Artefakte werden in Form einer Strahlaufhärtungskorrektur berücksichtigt. Dabei wird eine einzige Kennlinie aus den Messergebnissen aller Pixel des Detektors bestimmt.

In der WO 2006/094493 (= EP 06722577.1) wird alternativ ein Verfahren vorgeschlagen, bei dem die Durchstrahlungslängen in den verschiedenen Drehstellungen des Messobjektes bezüglich der CT-Sensorik mit Hilfe des CAD-Modells des Werkstücks bestimmt werden. Hierbei ist es notwendig, eine exakte Ausrichtung des Werkstücks im CT-Messsystem zu den CAD-Daten durchzuführen.

Bei den zum Stand der Technik zählenden Verfahren wird jedoch nicht berücksichtigt, dass nicht allein die Durchstrahlungslänge, sondern auch die Geometrie des Werkstücks insbesondere in den verschiedenen Drehlagen, unterschiedliche Artefakte, z. B. durch unterschiedliche Streustrahlung, hervorruft. Außerdem wird durch die Korrektur mit Hilfe einer einzigen Kennlinie für die Projektionsdaten aller Pixel des Detektors nicht berücksichtigt, dass ebenso Artefakte durch unterschiedliche Eigenschaften der einzelnen Pixel ausgelöst werden.

Aufgabe der vorliegenden Erfindung ist es auch, ein Verfahren eingangs genannter Art derart weiterzubilden, dass eine wirksame Korrektur von Artefakten bei CT-Messungen erfolgt. Erfindungsgemäß wird die Aufgabe im Wesentlichen dadurch gelöst, dass für die Korrektur der Messwerte der einzelnen Pixel oder Gruppen von Pixeln des eingesetzten CT-Detektors unterschiedliche Kennlinien verwendet werden. Erfindungsgemäß werden die unterschiedlichen messtechnischen Eigenschaften der Einzelpixel des zur Bestimmung der Schwächungswerte bei der Durchstrahlung des Messobjektes eingesetzten Detektors berücksichtigt. Erfindungsgemäß werden dazu mehrere Kennlinien bestimmt, die den Zusammenhang zwischen durchstrahlter Bauteillänge und Schwächungswert auf dem Detektor beschreiben. Neben der Durchstrahlungslänge wird in den Kennlinien zusätzlich die Geometrie des Werkstücks berücksichtigt. Dies erfolgt erfindungsgemäß dadurch, dass die Kennlinien in den verschiedenen Drehstellungen des Messobjektes an die Durchstrahlungsgeometrie angepasst werden, also nicht allein die Durchstrahlungslänge, sondern die Abfolge der verschiedenen Materialien in Durchstrahlungsrichtung berücksichtigt wird. Die Zuordnung der Kennlinien zu den einzelnen Detektorpixeln erfolgt am im CT-Messsystem eingebrachten Werkstück.

Die zur Bestimmung der Korrekturkennlinien notwendige Ermittlung der Geometrie des Werkstücks kann z. B. iterativ aus den vollständigen Projektionsdaten oder nach der Ausrichtung an CAD-Daten mit Hilfe dieser ermittelt werden, wie bereits im Stand der Technik beschrieben.

Der Vorteil der beschriebenen Vorgehensweise liegt in der Berücksichtigung der unterschiedlichen messtechnischen Eigenschaften der einzelnen Pixel des Detektors, aber auch der differenzierten Berücksichtigung von Strahlaufhärtung und Streustrahlung, Absorption im Bauteil, sowie Beugungs- und Brechungseffekten. Zudem ermöglicht das Verfahren die einzelnen Kennlinien auch bei einer lateralen Bewegung des Messobjektes senkrecht zur Durchstrahlungsrichtung (z. B. in der Spiraltomografie) mitzuführen. Dabei wird berücksichtigt, dass die, die Strahlungsabsorption charakterisierenden, Linienintegrale entlang einer Durchstrahlungsrichtung in den verschiedenen Lateralstellungen durch unterschiedliche Pixel bestimmt werden.

Die Berücksichtigung der Artefakte durch Streustrahlung, Absorption, Beugungs- und Brechungseffekte kann beispielsweise dadurch erfolgen, dass die Kennlinien einen oder mehrere Parameter enthalten, die die in der vorliegenden Durchstrahlungsrichtung charakteristische Geometrie (Materialabfolge) berücksichtigen. Dies kann beispielsweise die gewichtete mittlere Durchstrahlungslänge der einzelnen Materialabschnitte oder ein anderes daraus gebildetes Kontrastverhältnis sein. Weitergehende analytische Korrekturzusammenhänge können beispielsweise mit Hilfe von Simulationen ermittelt werden.

Insbesondere ist vorgesehen, dass zur Bestimmung der einzelnen Kennlinien die unterschiedlichen messtechnischen Eigenschaften der einzelnen Pixel oder Gruppen von Pixeln und/oder Artefakte bei der computertomografischen Abbildung ermittelt werden.

Die messtechnischen Eigenschaften der einzelnen Pixel oder Gruppen von Pixeln stellen den Zusammenhang zwischen der empfangenen Strahlleistung und dem ausgegebenen Sensorsignal dar. Dieser kann für einzelne Pixel oder Gruppen von Pixeln auf Grund unterschiedlicher Offsetwerte, also Sensorsignale bei fehlender Bestrahlung, und/oder unterschiedlicher Empfindlichkeit variieren.

Dabei können in den Kennlinien die Einflüsse durch Artefakte berücksichtigt werden, indem die den einzelnen Pixeln oder Gruppen von Pixeln zugeordneten Durchstrahlungslängen und/oder die Geometrie des Werkstücks in den verschiedenen Drehstellungen zur Aufnahme der verschiedenen Projektionsdaten während der CT-Messung bestimmt wird.

Die Einflüsse durch Artefakte werden in den Kennlinien derart berücksichtigt, dass jeder gemessenen Strahlintensität I nicht nur eine einzige Durchstrahlungslänge L zugeordnet wird, sondern in Abhängigkeit von der zunächst grob bekannten Durchstrahlungslänge und/oder Geometrie des Werkstücks eine Korrektur hinterlegt wird, welche aus der gemessenen Intensität die Ermittlung der richtigen Durchstrahlungslänge ermöglicht. Die Hinterlegung kann in Form von analytischen Beschreibungen oder look-up-Tabellen erfolgen.

Insbesondere ist vorgesehen, dass die Bestimmung der Durchstrahlungslänge und/oder der Geometrie des Werkstücks in den verschiedenen Drehstellungen anhand von nahezu vollständig vorliegenden Projektionsdaten und/oder anhand eines CAD-Modells erfolgt.

In Weiterbildung sieht die Erfindung vor, dass die Bestimmung der unterschiedlichen messtechnischen Eigenschaften der einzelnen Pixel oder Gruppen von Pixeln, insbesondere der Empfindlichkeit und des Offsets, anhand der Bestimmung von Durchstrahlungsbildern ohne und mit Messobjekten bekannter Eigenschaften, insbesondere der Geometrie, erfolgt.

Ferner ist vorgesehen, dass zur Korrektur von Artefakten aus den zuvor bestimmten Durchstrahlungslängen und/oder der in der jeweiligen Durchstrahlungsrichtung vorliegenden charakteristischen Geometrie eine oder mehrere Parameter abgeleitet werden, die in den Kennlinien berücksichtigt werden.

Die in den Kennlinien berücksichtigten Parameter dienen zur Anpassung an die vorliegende charakteristische Geometrie in der jeweiligen Durchstrahlungsrichtung. Hiermit soll berücksichtigt werden, dass ein gegebenes Werkstück in unterschiedlichen Drehstellungen unterschiedlich große Durchstrahlungsrichtungen besitzt und damit die zur Korrektur von Artefakten auferlegte Beeinflussung der Kennlinie unterschiedlich stark erfolgt.

Es können Parameter aus der charakteristischen Geometrie abgeleitet werden, indem aus der Geometrie und/oder Materialabfolge die durchstrahlten Strecken je Materialart und Anordnung erfasst werden und hieraus auf die Ausbildung von Artefakten wie Streustrahlungs- und Strahlaufhärtungsartefakten geschlussfolgert wird.

Der zuvor genannte Parameter kann dabei auch die Materialabfolge mitberücksichtigen. Insbesondere Streustrahlung tritt dann vermehrt auf, wenn ein häufiger Wechsel zwischen verschiedenen Materialien vorliegt.

Auch besteht die Möglichkeit, dass die Parameter aus der charakteristischen Geometrie abgeleitet werden, indem aus der Geometrie und/oder Materialabfolge eine gewichtete mittlere Durchstrahlungslänge der einzelnen Materialabschnitte oder ein anderweitig analytisch gebildetes Kontrastverhältnis, z. B. mit Hilfe von Simulationen ermittelt wird und hieraus auf die Ausbildung von Artefakten wie Streustrahlungs- und Strahlaufhärtungsartefakten geschlussfolgert wird.

Um die Anzahl der abfolgenden Materialien analytisch zu erfassen, lässt sich beispielsweise ein Kontrast entlang der Durchstrahlungsrichtung bestimmen. Dieser soll die Anzahl der Materialänderungen erfassen. Bezieht man die Häufigkeit der Materialänderungen auf die insgesamt vorliegende Durchstrahlungslänge, lässt sich eine Schlussfolgerung auf die Stärke der Beeinflussung der gemessenen Strahlintensität am Ende der durchstrahlten Länge ermitteln. Insbesondere Streustrahlung verteilt sich beispielsweise auf eine größere Breite und bewirkt geringere Intensitätsänderungen für die mit der Streustrahlung zusätzlich beaufschlagten Pixel, je größer die Durchstrahlungslänge ist.

Nach einer Weiterbildung ist vorgesehen, dass unterschiedliche Korrekturkennlinien in Abhängigkeit von der Drehstellung und/oder der Position des Werkstücks ermittelt und verwendet werden.

Es besteht auch die Möglichkeit, dass die Auswahl und Zuordnung der jeweiligen Kennlinie für die einzelnen Detektorpixel und/oder Gruppen von Pixeln in den jeweiligen Drehstellungen oder Positionen des Werkstücks durch Ausrichtung am Werkstück erfolgt.

Insbesondere ist vorgesehen, dass in den Kennlinien die Einflüsse durch Artefakte berücksichtigt werden, indem anhand zumindest eines Durchstrahlungsbildes des Werkstücks in zumindest einer Drehstellung und/oder Position gemeinsame oder unterschiedliche Korrekturwerte für die einzelnen Pixel oder Gruppen von Pixeln des eingesetzten CT-Detektors ermittelt werden.

Durch Vergleich der aus den einzelnen gemessenen Intensitäten der einzelnen Pixel des Detektors (Durchstrahlungsbild) ermittelten Durchstrahlungslänge mit der aus der real vorliegenden Geometrie ableitbaren real vorliegenden Durchstrahlungslänge lassen sich Korrekturwerte für die einzelnen Pixel, also Korrekturlängen, bestimmen. Insbesondere für benachbarte Pixel können diese Korrekturlängen unter Umständen gleich sein.

Treten in anderen Drehstellungen des Messobjektes gleiche Durchstrahlungslängen in Verbindung mit gleichen Materialabfolgen auf, so können die Korrekturwerte für die dann betroffenen Pixel teilweise übernommen werden, es müssen jedoch die möglicherweise abweichenden physikalischen bzw. messtechnischen Eigenschaften des dann betroffenen Pixels berücksichtigt werden.

Dabei können zur Bestimmung der Korrektur die Messwerte von Pixeln des CT-Detektors verwendet werden, welche größtenteils von den Teilen der abgegebenen Röntgenstrahlung der Röntgenquelle beeinflusst werden, welche nicht auf direktem, gradlinigen Weg durch das Werkstück verlaufen.

Durch Messung der Intensität des nicht durch das Werkstück abgeschwächten Messstrahles werden Variationen der Intensität des Messstrahls, z. B. auf Grund von Leistungsschwankunken der Röntgenröhre, erfasst und als Korrektur für alle Detektorpixel, z. B. Gain-Korrektur, verwendet.

Die Auswahl der Pixel, deren Messwerte zur Bestimmung der Korrektur verwendet werden, erfolgt dadurch, dass zumindest ein Durchstrahlungsbild des Werkstücks mit zumindest einem Durchstrahlungsbild ohne Werkstück verglichen wird und anhand des Vergleiches alle oder ein Teil der Pixel ausgewählt werden, welche im Durchstrahlungsbild mit Messobjekt eine höhere gemessene Intensität aufweisen als im Durchstrahlungsbild ohne Messobjekt, oder dass die Auswahl der Pixel, deren Messwerte zur Korrektur verwendet werden, innerhalb des Durchstrahlungsbildes mit Werkstück erfolgt, indem zumindest ein Pixel, welches ausschließlich von Teilen der abgegebenen Röntgenstrahlung der Röntgenquelle beeinflusst wird, die nicht durch das Werkstück verlaufen, mit zumindest einem Pixel verglichen wird, welches eine höhere gemessene Intensität aufweist.

Dabei besteht die Möglichkeit, dass die anhand der ausgewählten Pixel ermittelten Korrekturwerte auf die Kennlinien aller derer Pixel gleichermaßen angewendet werden, welche Röntgenstrahlung empfangen, die auf direktem Wege von der Röntgenquelle durch das Werkstück verlaufen, oder das die Korrektur abhängig von der den einzelnen Pixeln oder Gruppen von Pixeln zugeordneten Durchstrahlungslängen und/oder Geometrie und/oder Materialabfolge des Werkstücks in den verschiedenen Drehstellung und/oder Positionen erfolgt.

Der zuvor beschriebene Vergleich dient zur Ermittlung der Stärke einer Streustrahlung, welche für einen gewissen Bereich gültig ist. Dieser gültige Bereich ist der Bereich auf dem Detektor, welcher diejenigen Pixel enthält, welche Strahlung empfangen, die auf direktem Wege durch das Messobjekt verlaufen sind. Für all diese Pixel wird eine gleichgroße Streustrahlungsüberlagerung angenommen, welche damit für alle diese Pixel gleichermaßen korrigiert wird. Liegen innerhalb des gültigen Bereiches unterschiedliche Durchstrahlungslängen bzw. Materialabfolgen vor, so kann die in zuvor beschriebene und bestimmte Korrektur noch entsprechend angepasst werden.

In Weiterbildung ist vorgesehen, dass Messwerte der Pixel, die zur Bestimmung der Korrektur verwendet werden, in einer oder mehreren verschiedenen Stellungen des Werkstücks zwischen der Röntgenquelle und dem Röntgendetektor, insbesondere in verschiedenen Vergrößerungseinstellungen, ermittelt und/oder kombiniert werden und in verschiedenen Vergrößerungseinstellungen angewendet werden, z. B. durch den Einsatz von Interpolationsverfahren.

Der Einsatz von Interpolationsverfahren ermöglicht eine Korrektur der Kennlinien für Vergrößerungen, in denen der Zusammenhang zwischen gemessener Intensität und Durchstrahlungslänge sowie die Materialabfolgen abhängige Korrektur der Kennlinie nicht bestimmt wurde.

Dazu werden die Korrekturen aus benachbarten Vergrößerungseinstellungen, insbesondere geringeren und höheren Vergrößerungseinstellungen verwendet.

Alternativ bzw. ergänzend können Messwerte der Pixel, die zur Bestimmung der Korrektur verwendet werden, in einer oder mehreren verschiedenen Stellungen des Werkstücks zwischen der Röntgenquelle und dem Röntgendetektor und mehreren verschiedenen Stellungen der Röntgenquelle bezüglich des Röntgendetektors, insbesondere bei gleichen Vergrößerungseinstellungen, aber unterschiedlichen das Messobjekt durchdringenden Kegelstrahlwinkeln der von der Röntgenquelle abgegebenen Strahlung, ermittelt und/oder kombiniert werden und in einer oder verschiedenen Vergrößerungseinstellungen angewendet werden, z. B. durch den Einsatz von Interpolationsverfahren.

Ähnlich wie zuvor erläutert treten für unterschiedliche Kegelstrahlwinkel unter Umständen unterschiedliche notewendige Korrekturen auf. Durch Bestimmung dieser Korrekturen in definierten Kegelstrahlwinkeln können unter Einsatz von Interpolationsverfahren diese Korrekturen auch auf dazwischen liegende Kegelstrahlwinkel erweitert werden.

Es besteht auch die Möglichkeit, dass durch Zusammensetzung eines Durchstrahlungsbildes aus mehreren Teildurchstrahlungsbildern, wobei diese, z. B. durch den Einsatz von Blenden, jeweils nur einen Teil des Werkstücks durchstrahlen, die Ausbildung von Artefakten, insbesondere Streustrahlungsartefakten, deutlich verringert wird und durch Vergleich mit dem komplett aufgenommenen Durchstrahlungsbild Korrekturwerte für zumindest einen Teil der verschiedenen Pixel des Detektors ermittelt werden, die gegebenenfalls zwischen und/oder auf in den zusammengesetzten Teildurchstrahlungsbildern fehlende Bereiche um die Einstrahlregion interpoliert und/oder extrapoliert werden.

Durch den Einsatz von Blenden wird der Kegelstrahlwinkel, der zur Durchstrahlung des Werkstücks verwendeten Strahlung deutlich verringert.

Dadurch lässt sich der Einfluss von Artefakten, insbesondere Streustrahlung deutlich verringern. Damit einher geht jedoch eine Verringerung des Messfeldes. Um dennoch das gesamte Messobjekt zu messen, ist es notwendig, einzelne Teilbilder zu einem Gesamtdurchstrahlungsbild zusammen zu setzen.

Dabei muss nicht zwangsläufig der gesamte Bereich des Werkstücks in den einzelnen Teilmessungen abgedeckt werden. Durch Vergleich des gleichen Bereiches im Teildurchstrahlungsbild mit dem Gesamtdurchstrahlungsbild kann der veränderte Einfluss von Artefakten, insbesondere der Streustrahlung ermittelt werden. Dieses Vorgehen kann für verschiedene Teildurchstrahlungsbilder wiederholt werden, welche nicht zwangsläufig direkt aneinander grenzen. Durch Interpolation der Korrekturwerte dieser Teildurchstrahlungsbilder kann auch die Korrektur für die Bereiche zwischen diesen Teildurchstrahlungsbildern durch Interpolation ermittelt werden.

Ebenso ist es möglich, auch die Korrekturwerte für Bereiche außerhalb der Teildurchstrahlungsbilder durch Extrapolation zu ermitteln.

Eine Weiterbildung der Erfindung sieht vor, dass unterschiedliche Korrekturkennlinien in Abhängigkeit von der Drehstellung des Werkstücks und/oder der Position des Werkstücks, wobei sich die Position des Werkstücks zwischen der Röntgenquelle und dem Röntgendetektor in Richtung der Hauptstrahlachse der Röntgenstrahlung verändern kann und/oder rechtwinklig zu dieser, um Rasterverfahren zu ermöglichen, ermittelt und verwendet werden.

Erfolgt die Tomografie in unterschiedlichen Positionen des Werkstücks innerhalb des Messvolumens, so wird ein bestimmter Bereich des Messobjektes nun auf einem anderen Pixel abgebildet. Um die unter Umständen unterschiedlichen messtechnischen Eigenschaften dieses Pixels bei der Korrektur zu berücksichtigen, kann die für das ursprüngliche Pixel bestimmte Artefaktkorrektur der Kennlinie auf das nun betroffene Pixel übertragen und mit der die abweichenden messtechnischen Eigenschaften korrigierenden Korrektur überlagert werden.

Die Auswahl und Zuordnung der jeweiligen Kennlinie für die einzelnen Detektorpixel und/oder Gruppen von Pixeln kann in den jeweiligen Drehstellungen oder Positionen des Werkstücks durch Ausrichtung am Werkstück erfolgen.

Es besteht auch die Möglichkeit, dass unterschiedliche Korrekturkennlinien in Abhängigkeit des verwendeten Spektrums der das Messobjekt durchdringenden Strahlung, vorzugsweise durch Verwendung unterschiedlicher Beschleunigungsspannungen der Röntgenröhre und/oder durch den Einsatz von Vorfiltern, ermittelt und verwendet werden.

Bei der Verwendung unterschiedlicher Spektren für die das Messobjekt durchdringenden Strahlung äußern sich die Artefakte, insbesondere Strahlaufhärtung aber auch Streustrahlung unterschiedlich. Daher müssen unterschiedliche Korrekturkennlinien abgelegt werden.

Nach einem weiteren Vorschlag ist vorgesehen, dass die Korrektur der Kennlinien der einzelnen Pixel oder Gruppen von Pixeln des Strahlungsdetektors während der Aufnahme der verschiedenen Durchstrahlungsbilder in den verschiedenen Drehstellungen und/oder Positionen des Werkstücks oder nach der Aufnahme des kompletten Satzes von Durchstrahlungsbildern erfolgt.

Insbesondere ist vorgesehen, die CT-Rekonstruktion für ein CT-Messsystem erfolgt, welches Teil eines Koordinatenmessgerätes ist.

Wie bereits erwähnt, entstehen bei der Aufnahme von Durchstrahlungsbildern für die Röntgentomografie durch verschiedene Effekte, wie Streustrahlung oder Strahlaufhärtung, Verfälschungen der aufgenommenen Signale. Dies führt insbesondere bei Anwendungen der Röntgentomografie für messtechnische Zwecke zu Messabweichungen, die den zulässigen Rahmen überschreiten. Zur Korrektur solcher Abweichungen sind verschiedene Verfahren aus der Literatur bekannt, die teilweise schon erwähnt wurden.

In der EP-A-1 415 179 wird ein Verfahren zur iterativen Korrektur entsprechender Fehlereinflüsse, auch Artefakt genannt, beschrieben. So wird zunächst eine erste grobe Rekonstruktion aus den noch verfälschten Durchstrahlungsbildern erzeugt. Hieraus werden Längen berechnet, mit denen eine Kennlinienkorrektur der Durchstrahlungsbilder durchgeführt wird. Anschließend erfolgt eine genaue Rekonstruktion der Messergebnisse.

Gegenstand der WO-A-2006/094493 ist ein Verfahren, bei dem zusätzlich Nominaldaten wie CAD-Daten zur Ermittlung der Strahlaufhärtungs-Artefakte berücksichtigt werden.

Ähnliche Verfahren werden in der Dissertation von Michael Maisl "Entwicklung und Aufbau eines hochauflösenden Röntgencomputertomografie-Systems für die Werkstückprüfung" aus dem Jahre 1992 beschrieben.

Auch sind Verfahren bekannt, nach denen zusätzliche Messungen mit anderen Sensoren am gleichen Werkstück durchgeführt werden. Auf dieser Grundlage können die mit Hilfe der Aufnahme von Durchstrahlungsbildern und nachfolgender Rekonstruktion erzeugten Messpunkte geometrisch in ihrer Lage korrigiert werden. Beispielhaft ist auf die EP-A- 1 749 190 und die WO-A-2008/128978A2 zu verweisen.

Bei den beiden erstgenannten Verfahren besteht der Nachteil darin, dass keine rückführbaren Messergebnisse bei der Ermittlung der Korrekturwerte herangezogen werden. Die erzielbare Genauigkeit ist hierdurch stark begrenzt. Der Nachteil des letztgenannten Verfahrens besteht darin, dass alle für eine spätere Auswertung notwendigen Flächen einzeln mindestens bei einem Musterwerkstück zusätzlich gemessen werden müssen. Hierdurch entsteht ein erheblicher Messaufwand, der die Anwendung aus wirtschaftlichen Gründen nur auf wenige, in hoher Genauigkeit zu messende Merkmale beschränkt.

Eine weitere Aufgabe der vorliegenden Erfindung ist es, zum einen die Nachteile der oben genannten Verfahren zu vermeiden und zum anderen eine erhebliche Verbesserung der Genauigkeit der erzielten Rekonstruktionsergebnisse zu erzielen.

Erfindungsgemäß wird die Aufgabe im Wesentlichen dadurch gelöst, dass eine Korrektur der Durchstrahlungsbilder dadurch erfolgt, dass die Durchstrahlungsbilder einer Kennlinienkorrektur unterzogen werden, bei der durch Kalibriermessungen am gleichen Werkstück gewonnene kalibrierte Längen berücksichtigt werden.

Dabei ist insbesondere vorgesehen, dass die Messungen für die Kalibrierung der kalibrierten Längen mit Hilfe von Koordinatenmessgeräten durchgeführt werden.

Bevorzugterweise werden die Messungen für die Bestimmung der kalibrierten Längen durch ein Multisensor-Koordinatenmessgerät durchgeführt, in das eine Sensorik für Röntgencomputertomografie integriert ist.

Insbesondere ist vorgesehen, dass zur Bestimmung der Korrekturkennlinien nur einige der durch Röntgentomografie ausgewerteten Durchstrahlungslängen, typischerweise 10 bis ca. 100 Durchstrahlungslängen, kalibriert werden.

Eine besonders hervorzuhebende Ausgestaltung der Erfindung sieht vor, dass die zur Bestimmung der Korrekturkennlinie ausgewerteten Durchstrahlungslängen möglichst gleichmäßig von 0 bis zur maximal auftretenden Durchstrahlungslänge des entsprechenden Werkstücks verteilt sind.

Dabei können die zur Bestimmung der Korrekturkennlinie ausgewerteten Durchstrahlungslängen in unterschiedlichen Drehpositionen des Werkstücks im Computertomografie-Strahlengang ermittelt werden.

Eigenerfinderisch wird vorgeschlagen, dass die Kennlinienkorrektur durch Vergleich zwischen der den Zusammenhang zwischen Durchstrahlungslänge und gemessener Strahlintensität darstellenden Kennlinie und den den gemessenen Strahlintensitäten zugeordneten, mit Hilfe der Kalibriermessungen bestimmten Durchstrahlungslängen ermittelt wird.

Die Erfindung zeichnet sich insbesondere auch dadurch aus, dass die Ermittlung der Korrekturkennlinie durch Interpolation der Durchstrahlungslängen und zugehörigen Durchstrahlungswerten zwischen den kalibrierten Werten und/oder durch Extrapolation oberhalb und/oder unterhalb der kalibrierten Werte erfolgt.

Dabei kann als Interpolationsverfahren vorzugsweise Spline-Interpolation, Polygon-Interpolation oder Interpolation mit Funktionen mit analytischer Beschreibung eingesetzt werden.

Bevorzugterweise sollte die Hinterlegung der Kennlinienkorrektur anhand analytischer Funktionen und/oder diskreter Wertetabellen (Look-up-Table) erfolgen.

Eigenerfinderisch ist vorgesehen, dass die Bestimmung der kalibrierten Längen durch vorzugsweise optische oder taktile Messungen des Ein- und Austrittspunkts eines Teiles der invasiven Strahlung (Strahl) am Werkstück und/oder durch Bestimmung des Ein- und Austrittspunktes durch mathematische Verknüpfung von vorzugsweise optisch oder taktil gemessenen Ausgleichselementen, vorzugsweise Ebenen oder Zylindern, im Bereich der jeweiligen Durchstoßpunkte durch die Werkstückoberfläche erfolgt.

Insbesondere sollte die Ausrichtung des Werkstücks anhand der gemessenen Regelgeometrieelemente und/oder durch Einpassung von Teilen des Werkstücks und/oder des gesamten Werkstücks erfolgen.

Die Lösung der der Erfindung zu Grunde liegenden Aufgabe kann im Wesentlichen dadurch erzielt werden, dass am zu messenden Werkstück einzelne typische Längen durch eine zusätzliche Messung mit einem Koordinatenmessgerät oder in das Koordinatenmessgerät mit Computertomografie integrierte zusätzliche Sensoren exakt gemessen werden. Diese einzelnen verschiedenen, "somit kalibrierten", Längen entsprechen bei Einsatz der Computertomografie aufgetretenen Durchstrahlungslängen

(auf der Verbindungslinie zwischen Röntgenquelle und Sensorelement). Aus den entsprechenden 2D-Durchstrahlungsbildern und einer ersten groben Rekonstruktion aller Durchstrahlungslängen können unter zu Hilfenahme der kalibrierten Durchstrahlungslängen Kennlinien für die Korrektur der 2D-Durchstrahlungsbilder erzeugt werden, welche den Zusammenhang zwischen den aus den Sensorsignalen der 2D-Durchstrahlungsbilder ermittelten Schwächungswerten, z. B. in Form von Grauwerten, und den durchstrahlten Bauteillängen beschreiben. Die Genauigkeit dieser Kennlinienberechnung ist durch die Genauigkeit der Kalibriermessung der ausgewählten Durchstrahlungslängen definiert.

Die Kalibrierung der entsprechenden Durchstrahlungslängen kann grundsätzlich auf zwei Wegen erfolgen. Zum einen ist es möglich, direkt den gedachten Ein- und Austrittspunkt des entsprechenden Strahls am Werkstück optisch oder taktil anzutasten. Alternativ ist es ebenfalls denkbar, Ausgleichselemente in dem Bereich der jeweiligen Durchstoßpunkte durch die Werkstückoberfläche zu messen, zum Beispiel Ebenen oder Zylinder, und hieraus durch mathematische Verknüpfung die Durchstoßpunkte zu ermitteln.

Um die entsprechenden Punkte sowohl im rekonstruierten Volumen als auch bei der zum Beispiel optischen oder taktilen Gegenmessung am Werkstück exakt aufzufinden, ist es sinnvoll vorher eine mathematische Werkstückausrichtung durchzuführen. Diese kann alternativ durch Ausrichtung an gemessenen Regelgeometrieelementen oder durch Einpassung von Teilen des Werkstücks oder Einpassung des ganzen Werkstücks erfolgen.

Bei der Durchführung des Verfahrens ist es sinnvoll, eine vernünftige Anzahl von zum Beispiel 10 - 100 Durchstrahlungslängen mit möglichst gleichmäßig verteilter Länge zwischen 0 und Maximallänge zu verwenden. Hierzu ist es ebenfalls sinnvoll, die entsprechenden Messungen aus unterschiedlichen Drehpositionen des Werkstücks im Computertomografie-Strahlengang zu ermitteln. Die Ermittlung der Kennlinien zur Korrektur der Durchstrahlungsbilder erfolgt dann durch Interpolation der entsprechenden Längen und zugehörigen Durchstrahlungswerte zwischen den kalibrierten Werten. Als Interpolationsverfahren können verschiedene bekannte Verfahren, wie Spline-Interpolation, Polygon-Interpolation oder Interpolation mit Funktionen mit analytischer Beschreibung erfolgen.

Um dimensionelle Messungen an Bauteilen mit Hilfe von Messgeräten unter Verwendung von Computertomografiesensoren durchzuführen, ist es notwendig, diverse Einstellungen an der Röntgenquelle und dem eingesetzten Röntgendetektor wie auch der zur Rotation des Bauteils eingesetzten Drehachse vorzunehmen. Dies betrifft insbesondere den Strom und die Beschleunigungsspannung der Röntgenröhre, die Belichtungszeit je Durchstrahlungsbild, die Anzahl der Bildmittelungen über mehrere Durchstrahlungsbilder, die Anzahl der Mittelung über benachbarte Pixel des Röntgendetektors (Binning), die gewählte Vergrößerung (Position des Werkstücks zwischen Röntgenquelle und Röntgendetektor) sowie die Anzahl der Drehstellungen des Werkstücks in denen Durchstrahlungsbilder aufgenommen werden. Abhängig von der maximalen Durchstrahlungslänge und der Geometrie des Bauteils sowie der zu erzielenden Voxelauflösung und Genauigkeit müssen diese Parameter aufwendig von Hand eingestellt werden. Dabei muss insbesondere darauf geachtet werden, dass in keiner der Drehstellungen die Pixel auf dem Röntgendetektor überstrahlt sind oder zu dunkel erscheinen. Weiterhin lassen sich optimale Ergebnisse erreichen, indem der Kontrast des Detektorbildes möglichst hoch ist, also der Grauwertunterschied zwischen dem hellsten und dunkelsten zur Auswertung verwendeten Pixels.

Der vorliegenden Erfindung liegt deshalb auch die Aufgabe zugrunde, dass für eine Computertomografie (CT) notwendige Parameter so gewählt werden, dass eine möglichst qualitativ hochwertige wie kontrastreiche Abbildung auf einem Detektor erreicht wird, insbesondere unabhängig von der Drehstellung eines zu messenden Werkstückes, also in allen Drehstellungen.

Zur Lösung der Aufgabe sieht die Erfindung insbesondere vor, dass anhand von vorab aufgenommenen Durchstrahlungsbildern Parameter für die Computertomografie ausgewählt werden.

Dabei ist eigenerfinderisch vorgesehen, dass aus den Vorabdurchstrahlungsbildern durch mathematische Methoden oder durch Variationen der Parameter die für die Computertomografie zu verwendenden Parameter bestimmt werden.

Ein eigenerfinderischer Gehalt ergibt sich dadurch, dass die Auswahl der zu variierenden Parameter und/oder der Variationsbereich fest eingestellt und/oder durch den Bediener und/oder anhand zumindest eines Durchstrahlungsbildes bestimmt wird.

In hervorzuhebender Weise ist vorgesehen, dass als die Parameter für die Computertomografie der Strom und/oder die Beschleunigungsspannung der Röntgenquelle und/oder die Belichtungszeit auf dem Detektor und/oder die Anzahl der Mittelungen je Durchstrahlungsbild und/oder die Anzahl der Mittelungen über Pixel des Detektors (Binning) und/oder die Anzahl der Drehstellungen des Messobjektes zwischen der Röntgenquelle und dem Röntgendetektor und/oder der Position des Objektes zwischen der Röntgenquelle und dem Röntgendetektor (Vergrößerung) ausgewählt wird bzw. werden.

Kennzeichnendes Gepräge besitzt auch der Vorschlag, dass zumindest einer der Parameter solange automatisch variiert wird, bis eine Ausgangsgröße, vorzugsweise der Kontrast in den Durchstrahlungsbildern, ein Maximum annimmt, und/oder einen vordefinierten Wert überschreitet oder unterschreitet.

Hervorzuheben ist des Weiteren, dass gültige Werte des Kontrastes der Differenz zwischen Grauwert von hellstem und vom dunkelstem Pixel zumindest eines Teiles des gesamten Durchstrahlungsbildes je Durchstrahlungsbild und/oder über alle Durchstrahlungsbilder entsprechen, während das dunkelste Detektorpixel einen Grauwert größer als ein vordefiniertes Minimum und das hellste Pixel einen Grauwert kleiner als ein vordefiniertes Maximum besitzt.

Unabhängig hiervon ist insbesondere vorgesehen, dass die erfindungsgemäßen Lehren beim Messen mit einem Koordinatenmessgerät verwirklicht werden, d. h. dass das computertomografische Messsystem Teil eines Koordinatemessgerätes ist.

Erfindungsgemäß ist vorgesehen, dass anhand von wenigen vorab aufgenommenen Durchstrahlungsbildern in verschiedenen Drehstellungen und unter Variation von einem oder mehreren Parametern wie Strom und/oder Beschleunigungsspannung der Röntgenröhre und/oder Belichtungszeit auf dem Detektor und damit Bildhelligkeit und/oder Anzahl von Bildmittelungen sowie Anzahl der zusammenzufassenden Pixel (Binning) und/oder Vergrößerung und Anzahl der Drehschritte ein Optima für eine Regelgröße wie Bildkontrast erreicht wird, um zunächst eines dieser Parameter sodann für die Computertomografie (CT) einzusetzen.

Erfindungsgemäß wird ein Verfahren zur automatischen Bestimmung von zumindest einem Parameter einer Computertomografie vorgeschlagen, wobei anhand von vorab aufgenommenen Durchstrahlungsbildern ein oder mehrere Parameter für die Computertomografie ausgewählt werden.

Der Vorteil der Erfindung besteht darin, dass die Anpassung der optimalen CT-Parameter automatisch erfolgen kann und damit einerseits die Vorbereitungszeit für eine CT verkürzt werden kann und andererseits Fehlentscheidungen durch den Bediener reduziert werden.

Insbesondere sieht die Erfindung vor, dass der maximale Kontrast erreicht wird, wenn die Differenz des Grauwertes des hellsten und dunkelsten Pixels auf dem Detektor möglichst groß ist, wobei gleichzeitig der Grauwert des dunkelsten Pixels größer als ein Minimalwert und der Grauwert des hellsten Pixels kleiner als ein Maximalwert ist. Die dazu aufzunehmenden Durchstrahlungsbilder sollen in einer Ausprägung der Erfindung deutlich geringer als die Anzahl der Durchstrahlungsbilder zur eigentlichen Messung sein. Die vorab aufgenommenen Drehstellungen müssen so gewählt werden, dass die minimale und maximale Durchstrahlungslänge des Bauteils enthalten ist. Dadurch wird gewährleistet, dass die hellsten Pixel nicht überstrahlen und die dunkelsten Pixel nicht zu dunkel erscheinen.

Bei bisher bekannten Messsystemen, vorzugsweise computertomographischen Messsystemen unter Verwendung von Drehachsen, ist es notwendig, dass das Werkstück, wie rotationssymmetrisches Werkstück, mittig auf einer physikalischen Drehachse platziert wird, um Messergebnisse hoher Genauigkeit zu erzielen. Bei computertomographischen Abbildungen muss zudem gewährleistet sein, dass die Achse, um die das Werkstück gedreht wird, in allen Drehstellungen mittig bzgl. des Detektors angeordnet bleibt, um eine Rekonstruktion zu ermöglichen. Um das Messobjekt mittig zur Drehachse auszurichten, ist ein zeitaufwändiges Justieren notwendig.

Eine entsprechende Anordnung zum Justieren des Werkstücks in die Mitte der Drehachse ist als Messgerät der Serie "Primar" der Firma Mahr, Göttingen, bereits bekannt. Die ansonsten bei Drehung entstehende seitliche Bewegung des Werkstücks sorgt insbesondere bei sehr kleinen Teilen, welche vorzugsweise in tomographisch oder optisch hoher Vergrößerung gemessen werden, dafür, dass das Werkstück nicht in allen Drehstellungen vollständig auf dem Detektor abgebildet wird. Dies ist jedoch Voraussetzung für eine auswertbare Messung. Ebenso erfordert der Einsatz in der Produktionslinie, beispielsweise verbunden mit einer automatischen Bestückung, schnelle Einricht- und Justierzeiten.

Nachteilig bei bisher bekannten Verfahren zu computertomographischen Messungen ist zudem, dass Teile, die deutlich unterschiedliche Dimensionen besitzen, nicht in allen Drehstellungen ausreichend kontrastreich mit der gleichen Strahlenergie abgebildet werden können. Ursächlich hierfür sind die unterschiedlich auftretenden Durchstrahlungslängen und die damit verbundene Schwächung der Messstrahlung. Die den Detektor erreichende Strahlung liefert nur dann auswertbare Informationen, wenn sämtliche Bereiche (Pixel) des Zeilen- oder Flächendetektors Intensitäten über einem Minimal- und unter einem Maximalwert beinhalten. Um diesen so genannten auswertbaren Kontrast in den Durchstrahlungsbildern aller Drehstellungen mit der gleichen Strahlenergie zu erhalten, dürfen die Unterschiede in den Strahlschwächungen entlang der Durchstrahlungslängen in der kleinsten und zweitgrößten Dimension des Werkstücks einen bestimmten Wert nicht überschreiten. Die größte Werkstückdimension wird zumeist vorteilhaft senkrecht zur Durchstrahlungsrichtung angeordnet, soweit das Messvolumen dies zulässt.

Werkstücke, die in zwei Dimensionen sehr ausgedehnt und in der dritten sehr kurz sind, können momentan nur mit Hilfe zumindest zweier Messungen mit unterschiedlichen Strahlenergien gemessen werden. Dazu wird jeweils eine komplette Messung in allen Drehstellungen von 0° bis 360° mit den zumindest zwei verschiedenen Strahlenergien durchgeführt. Anschließend wird für jede Drehstellung ein Durchstrahlungsbild aus den zumindest zwei Durchstrahlungsbildern der Einzelmessungen errechnet. Diese Datenfusion beinhaltet eine Anpassung der jeweils zusammengehörigen Durchstrahlungsbilder jeder Drehstellung. Diese Bilder enthalten naturgemäß überstrahlte oder zu dunkle Bereiche, also Bereiche ohne auswertbaren Kontrast. Entsprechende dürfen zur Auswertung nicht verwendet werden und werden durch Informationen aus jeweils zumindest einem der anderen Durchstrahlungsbilder dieser Drehstellung ersetzt. Um den absoluten Bezug der Intensitäten der Bilder zu gewährleisten, erfolgt zuvor eine Anpassung bzw. Normierung der zugehörigen Bilder auf das gleiche Intensitätsniveau, vorzugsweise anhand der Intensitäten von den Bereichen der Durchstrahlungsbilder, die in allen Bildern gleichzeitig weder überstrahlt noch zu dunkel sind. Dies ist beispielsweise durch sog. "Downscaling", "Upscaling" oder durch Mittelung möglich und stellt in Verbindung mit dem erfindungsgemäßen Verfahren ebenso einen Bestandteil der vorliegenden Erfindung dar.

Zur gemeinsamen Auswertung von Messwerten computertomographischer Messungen, welche an unterschiedlichen Stellen des gleichen Werkstücks erfolgen, sind dem Stand der Technik bisher nur Verfahren bekannt, bei denen Messungen in gleichen Vergrößerungen und damit nahezu gleichen Pixel- bzw. Voxelrastern aneinandergesetzt werden. Eine entsprechende Vorgehensweise ist in der WO-A-2005/119174 beschrieben. Die Aneinanderreihung der Messdaten erfolgt dabei unter Berücksichtigung der Relativpositionen zwischen Messobjekt, Strahlungsquelle und Detektor, welche vorzugsweise durch genaue Bewegungsachsen eines Koordinatenmessgerätes verfahren werden oder über Stitching-Verfahren. Nicht gelöst wird damit jedoch die gemeinsame Auswertung von Messdaten, die aus Messungen mit unterschiedlichen Vergrößerungen ermittelt wurden. Dabei müssen insbesondere abweichende Pixel- bzw. Voxelraster berücksichtigt werden. Die gemeinsame Auswertung von Messwerten aus unterschiedlichen Vergrößerungen ist notwendig, um beispielsweise kleine Details eines Werkstücks in hoher Vergrößerung sehr genau zu bestimmen, die Position des Details im Gesamtvolumen aber dennoch bestimmen zu können, wenn auch mit geringerer Genauigkeit infolge der dazu notwendigen geringeren Vergrößerung und damit Auflösung.

Nicht gelöst ist dabei insbesondere, dass Teile des Messobjektes bei der tomographischen Messung in hohen Vergrößerungen das Messvolumen senkrecht zur Drehachse in zumindest einigen wenigen Drehstellungen verlassen. Die fehlenden Durchstrahlungswerte dieser senkrecht zur Drehachse auf dem Detektor nicht abgebildeten Teile verhindern die Rekonstruktion der Volumendaten des Werkstücks. Im Gegensatz dazu sind dem Stand der Technik nur Verfahren zu entnehmen, bei denen sich die nicht abgebildeten Teile des Werkstücks ausschließlich in Richtung der Drehachse befinden.

Der vorliegenden Erfindung liegt daher auch die Aufgabe zugrunde, die Nachteile des Standes der Technik zu vermeiden und grundsätzlich Werkstücke unterschiedlicher Abmessungen mit hoher Genauigkeit unter Vermeidung aufwändiger Korrekturverfahren messen zu können, insbesondere die Probleme der Werkstücksausrichtung zu vermeiden.

Die vorliegende Erfindung löst die Aufgabe, insbesondere die Problematik der Werkstückausrichtung dadurch, dass Messergebnisse, insbesondere Aufnahmen mit einem Bildverarbeitungssensor oder Durchstrahlungsbilder, die in verschiedenen Drehstellungen des Werkstücks ermittelt werden, durch die Kombination translatorischer und rotatorischer Bewegungen direkt genau kombiniert werden, ohne das eine vorherige Ausrichtung des Werkstücks auf die physikalische Drehachse notwendig ist. Grundgedanke ist dabei, dass das Messobjekt um eine virtuelle Drehachse gedreht wird, die nicht zwangsläufig mit der physikalischen Drehachse zusammenfallen muss und die physikalische Drehachse in einer oder zwei Achsen und ggf. der Detektor in zumindest einer Achse während der Drehung der physikalischen Drehachse bewegt wird. Durch die Drehung des Werkstücks um eine virtuelle Drehachse, vorzugsweise Symmetrieachse des Werkstücks, wird erreicht, dass das Werkstück unabhängig von der aktuellen Drehstellung immer an annährend der gleichen Position des Detektors abgebildet wird. Die seitliche Bewegung des Werkstücks bezüglich des Detektors wird durch folgende zwei Möglichkeiten vermieden.

Eine erste Möglichkeit beinhaltet, dass der Detektor unbewegt bleibt, das Messobjekt aber um eine bezüglich des Detektors fest stehende Drehachse rotiert. Dies ist insbesondere auch dann möglich, wenn das Werkstück nicht mittig auf der physikalischen Drehachse angeordnet ist. Dies wird erreicht, indem die physikalische Drehachse, auf der das Werkstück fest angeordnet ist, in zwei Richtungen jeweils so positioniert wird, dass das Werkstück um eine raumfeste virtuelle Drehachse rotiert. Die physikalische Drehachse bewegt sich dabei während ihrer Drehung auf einer Kreisbahn um die virtuelle Drehachse, allerdings nur zusätzlich durch die beiden translatorischen Bewegungen. Es kann die translatorische Bewegung beispielsweise durch einen Kreuztisch, welcher zwei translatorische Freiheitsgrade aufweist, erfolgen.

Eine zweite Möglichkeit beinhaltet das gezielte Nachführen des Detektors in Kombination mit zumindest einer translatorischen Bewegung der Drehachse. Der Detektor wird der virtuellen Drehachse, die sich nun in einer Richtung während der Drehung der physikalischen Drehachse bewegt, in dieser einen Richtung nachgeführt. Diese Richtung steht senkrecht zur physikalischen Drehachse und senkrecht zur Normalen der Detektorebene. In Richtung der Normalen der Detektorebene steht die virtuelle Drehachse jedoch fest, auch dann, wenn das Messobjekt nicht mittig auf der physikalischen Drehachse angeordnet ist. Dies wird erreicht, indem die physikalische Drehachse entsprechend in Richtung der Normalen der Detektorebene nachgeführt wird. Dabei vollzieht die physikalische Drehachse eine lineare Bewegung, um den Abstand zwischen virtueller Drehachse und Detektorebene in Richtung der Normalen der Detektorebene konstant zu halten. Die seitliche Bewegung der virtuellen Drehachse und des Detektors im Abbildungsstrahl führen dazu, dass gleiche Bereiche des Werkstücks nun unter veränderten Winkeln des Abbildungsstrahls abgebildet werden. Die dabei entstehenden Messabweichungen können durch mathematische Methoden und ggf. eine Verkippung des Detektors um eine parallel zur Drehachse verlaufenden Richtung korrigiert werden. Die entsprechenden Verfahren sind bereits in der DE-A-10 2008 044 437 beschrieben. Voraussetzung für die Anwendung der Korrektur ist, dass Drehmittelpunktversatz und die Vergrößerung, also die Lage von Abbildungsstrahl, Drehachse und Detektor zueinander bekannt sind. Die zur Bestimmung notwendigen Verfahren beschreibt die EP 05750966.3.

Um die Bedingung zu erfüllen, dass die Achse, um die das Werkstück gedreht wird, also die virtuelle Drehachse, in allen Drehstellungen mittig bzgl. des Detektors angeordnet bleibt, wird im ersten Schritt nach dem Anordnen des Werkstücks auf der physikalischen Drehachse, diese physikalische Drehachse mit Hilfe zumindest einer translatorischen Bewegung so verschoben, dass die virtuelle Drehachse mittig zum Detektor ausgerichtet ist. Entsprechende Ausrichtungen, beispielsweise mit Umschlagsmessungen können dem Stand der Technik entnommen werden, beispielsweise der EP 05750966.3. Vorzugsweise ist diese Ausrichtung schnell und genau möglich, wenn hochgenaue Achsen eines Koordinatenmessgerätes, vorzugsweise CNC-Achsen, verwendet werden.

Zur Steuerung der Kombination aus translatorischen und rotatorischen Bewegungen wird ein Steuerrechner eingesetzt. Diesem muss dazu die relative Lage zwischen virtueller Drehachse und physikalischer Drehachse bekannt sein. Diese Lage ist entweder aus bereits beschriebenen Verfahren zur Ausrichtung des Werkstücks bekannt oder wird ermittelt, indem vorab in verschiedenen Drehstellungen der physikalischen Drehachse aufgenommene Kontrollmessungen, vorzugsweise Durchstrahlungsbilder, ausgewertet werden. Die dazu notwendigen Verfahren beschreiben die DE-A-10 2008 044 437 und die EP 05750966.3. Diese Verfahren können ebenso während der eigentlichen Messungen, zwischen den Messungen in den verschiedenen Drehstellungen erfolgen. Falls im Gerät weitere Sensoren vorhanden sind, können diese vorab oder während der Messung zur Bestimmung der Relativlage zwischen virtueller Drehachse und physikalischer Drehachse verwendet werden.

Durchstrahlungsbilder für die eigentliche Messung werden vorzugsweise nur dann aufgenommen, wenn die vorab definierten Winkel um die virtuelle Drehachse erreicht sind. Dadurch werden ein konstantes Winkelraster und die herkömmliche Rekonstruktion des Messvolumens ermöglicht. Der eingesetzte Steuerrechner erkennt dazu, wann mit Hilfe der Kombination aus translatorischer und rotatorischer Bewegung die jeweilige Drehstellung und laterale Position erreicht ist.

Als Werkstücke werden vorzugsweise rotationssymmetrische Teile und/oder Werkzeuge und/oder tomographierbare Teile eingesetzt.

In einem weiteren Aspekt der Erfindung wird die Messung von Teilen mit deutlich unterschiedlichen Dimensionen, die nicht in allen Drehstellungen ausreichend kontrastreich mit der gleichen Strahlenergie abgebildet werden können, vereinfacht. Dazu werden weniger Messungen als im Stand der Technik benötigt, da nicht für jede Drehstellung eine Aufnahme mit jeder Strahlenergie benötigt wird.

Erfindungsgemäß wird die Strahlenergie und/oder der verwendete Wellenlängenbereich, vorzugsweise Röhrenbeschleunigungsspannung, Röhrenstrom und/oder Wellenlängen einschränkende Filter, an die jeweils vorliegende Geometrie, vorzugsweise Durchstrahlungslänge und/oder das vorliegende Material, vorzugsweise die Materialdichte angepasst. Damit liegt nicht für jede Drehstellung ein Bild mit allen Strahlenergien vor. Eine schnellere Messung ergibt sich dadurch, dass vorzugsweise für die Messung mit beispielsweise zwei Strahlenergien in jeder Drehstellung nur ein Bild mit der einen oder der anderen Strahlenergie aufgenommen wird. Für die spätere Datenfusion ist es unter Umständen notwendig, zumindest für einige Drehstellungen mit mehr als einer Strahlenergie Bilder aufzunehmen.

Die Auswahl der für die je Drehstellung zu verwendenden Strahlenergie erfolgt anhand von vorab aufgenommenen wenigen Durchstrahlungsbildern und/oder anhand der während der eigentlichen Messung in einer oder mehreren der vorherigen Drehstellungen aufgenommenen Bildern und/oder anhand vorab bekannter Geometrie-und/oder Materialdaten, vorzugsweise aus dem CAD-Modell des Werkstücks. Mit Vorabaufnahmen kann in wenigen Drehstellungen durch Variation der Aufnahmeparameter wie der Strahlenergie ein Datensatz mit passenden Strahlenergien, vorzugsweise automatisch ermittelt werden. Für die fehlenden Drehstellungen werden die Strahlenergien interpoliert. Dies ist möglich, da mit sprunghaften Änderungen der Durchstrahlungslängen oder Materialien von Drehstellung zu Drehstellung nicht zu rechnen ist. Ebenso können deshalb auch aus den die Strahlenergie beschreibenden Parametern der vorherigen oder mehreren vorherigen Drehstellungen des eigentlichen Messablaufes, vorzugsweise durch Mittelung oder Extrapolation, die Parameter für die aktuelle Drehstellung ermittelt werden. Durch ständige oder erst nach mehreren Drehstellungen erfolgende Überwachung der Bildparameter der aufgenommenen Durchstrahlungsbilder, vorzugsweise durch Analyse der Überschreitung der maximalen Intensität und Unterschreitung der minimalen Intensität, erfolgt dann die Anpassung der Strahlenergie für die jeweils aktuelle Drehstellung. Zudem oder alternativ können vorab zur Verfügung stehende Informationen über die Geometrie, und damit nach Registrierung für die einzelnen Drehstellungen zur Verfügung stehenden Durchstrahlungslängen, und/oder das Material des Werkstücks genutzt werden, um die zu verwendende Strahlenergie für jede oder einzelne Drehstellungen festzulegen. Zwischenwerte können wiederum interpoliert werden. Aus den Werkstückdaten können mit Hilfe von Simulation der Abbildung, vorzugsweise durch Simulation der Strahlschwächung, der Streuung und/oder der Detektorempfindlichkeit, die notwendigen Strahlenergien für die jeweiligen Drehstellungen ermittelt werden, damit die Durchstrahlungsbilder einen auswertbaren Kontrast beinhalten.

Um die bereits zum Stand der Technik zählende Anpassung bzw. Normierung der mit unterschiedlichen Strahlenergien aufgenommenen zugehörigen Bilder auf das gleiche Intensitätsniveau zu ermöglichen, ist eine virtuelle Erzeugung der Durchstrahlungsbilder mit den Strahlenergien, mit denen nicht gemessen wurde durch Interpolation möglich. Als Grundlage dafür werden vorzugsweise in benachbarten Drehstellungen ermittelte Durchstrahlungsbilder gleicher Strahlenergie verwendet. Zudem ist die Anpassung durch Vergleich der verwendeten Strahlungsparameter möglich. Dazu werden anhand ausgewählter zusammengehöriger Bilderpaare gleicher Drehstellung aber unterschiedlicher Strahlenergien Transformationsgleichungen bestimmt, die vorzugsweise für Bilder ähnlicher Strahlenergien und/oder ähnlicher auf dem Detektor vorliegender Intensitätsverteilungen verwendet werden. Fehlende Transformationsgleichungen für weitere Strahlenergien oder Intensitätsverteilungen werden wiederum interpoliert.

Die gemeinsame Auswertung von Messwerten computertomographischer Messungen, die an unterschiedlichen Stellen und/oder mit unterschiedlichen Vergrößerungen und damit Pixel- bzw. Voxelrastern aufgenommen wurden löst die vorliegende Erfindung durch Merging und/oder Resampling der rekonstruierten Volumendaten der unterschiedlichen Messungen. Die einzelnen Messungen können sich dabei räumlich überlagern, wobei die Rekonstruktionswerte, vorzugsweise Grauwerte, in den Überlappungsbereichen gewichtet gemittelt werden. Die Gewichtung erfolgt beispielsweise in Abhängigkeit zum Abstand zu den Überlappungsgrenzen. Resampling auf ein einheitliches dreidimensionales Raster ist notwendig, um die nachfolgende Anwendung von Volumenfiltern auf den gesamten zusammengefügten Messdatensatz zu ermöglichen.

Werden Details eines Werkstücks in hoher Vergrößerung ermittelt, so werden unter Umständen Teile des Werkstücks in einigen Drehstellungen nicht auf dem Detektor abgebildet. Befinden sich diese nicht abgebildeten Teile seitlich in einer Richtung senkrecht zur physikalischen und/oder virtuellen Drehachse außerhalb des Messbereiches, so werden die in den Durchstrahlungsbildern fehlenden Bereiche aus den Messwerten, vorzugsweise den Durchstrahlungsbildern des jeweils gleichen Drehwinkels, zumindest einer Messung mit geringerer Vergrößerung errechnet, bei der der entsprechende Teil des Werkstücks auf dem Detektor abgebildet wurde. Die Berechnung der jeweiligen Durchstrahlungswerte erfolgt vorzugsweise mit Resamplingverfahren und/oder Interpolationsverfahren und/oder Extrapolationsverfahren.

Voraussetzung für die gemeinsame Auswertung der mehreren Datensätze von Volumendaten, insbesondere Grauwerte ist die genaue Zuordenbarkeit im Raum. Die Bewegung der Komponenten zur Veränderung des Messausschnittes des Werkstücks und zur Veränderung der Vergrößerung, also die das Werkstück tragende Drehachse, die Röntgenstrahlquelle und der Detektor erfolgt daher mit genauen Koordinatenmessgeräteachsen. Im Gegensatz zu Stitching-Verfahren müssen dadurch nicht zwangsläufig Überlappungsbereiche existieren.

Beim Resampling von Volumendaten werden die verschiedenen Datensätze zunächst im Raum entsprechend ihrer Aufnahmeposition angeordnet. Dazu existiert für jeden Grauwert eine x-, y- und z-Position. Anschließend wird ein festes x-, y-, z-Raster für alle Datensätze festgelegt, für welches die zugehörigen Grauwerte interpoliert werden. Damit wird ein einheitlich darstellbarer und auswertbarer Datensatz erzeugt. Erst dadurch ist es möglich, Distanzen zwischen hoch aufgelösten Merkmalen zu bestimmen und volumenbasierte Filter anzuwenden.

Vorzugsweise wird das bzw. die Verfahren in einem Koordinatenmessgerät eingesetzt und/oder die Anordnung in einem Koordinatenmessgerät integriert.

Die Erfindung zeichnet sich demzufolge u. a. durch ein Verfahren zur Bestimmung von Strukturen und/oder Geometrie eines Objektes wie Werkstücks mittels eines Messsystems, vorzugsweise computertomographischen Messsystems, umfassend zumindest eine Strahlungsquelle, zumindest einen Strahlungsdetektor und zumindest eine Drehachse dadurch aus, dass Aufnahmen, vorzugsweise Durchstrahlungsbilder, stammend aus verschiedenen Drehstellungen des Werkstücks kombiniert werden, für die:
- das Werkstück, mithilfe einer Kombination aus rotatorischer und translatorischer Relativbewegung zwischen Werkstück und Detektor, um eine von der physikalischen Drehachse verschiedenen Drehachse gedreht wird und/oder
- unterschiedliche Strahlungsenergien verwendet werden und/oder
- Messobjekt, Strahlungsquelle und/oder Detektor mehrere Positionen relativ zueinander einnehmen. Dabei ist insbesondere vorgesehen, dass das Werkstück, mithilfe einer Kombination aus rotatorischer und translatorischer Bewegung, um eine von der physikalischen Drehachse verschiedenen Drehachse gedreht wird, wobei die physikalischen Drehachse bezüglich des Detektors und/oder der Strahlungsquelle nicht ortsfest ist, indem die physikalische Drehachse in zumindest einer translatorischen Richtung verstellt wird und/oder der Detektor in zumindest einer translatorischen Richtung und/oder zumindest einer rotatorischen Richtung verstellt wird bzw. dass das Werkstück, mithilfe einer Kombination aus rotatorischer und translatorischer Bewegung, um eine von der physikalischen Drehachse verschiedenen Drehachse gedreht wird, indem der Detektor fest steht und die physikalische Drehachse in zwei translatorischen Richtungen verstellt wird, wobei die erste Richtung nahezu senkrecht zur Detektorebene verläuft und die zweite Richtung nahezu senkrecht zur Richtung der physikalischen Drehachse und nahezu senkrecht zur Normalen der Detektorebene verläuft.

Eigenerfinderisch wird vorgeschlagen dass das Werkstück um eine bezüglich des Detektors und/oder der Strahlungsquelle nicht ortsfeste physikalische Drehachse gedreht wird, indem die physikalische Drehachse in einer translatorischen Richtung verstellt wird, die nahezu senkrecht zur Detektorebene verläuft, und der Detektor in einer in der Detektorebene verlaufenden Richtung verstellt wird, welche senkrecht zur Richtung der physikalischen Drehachse ist und vorzugsweise der Detektor um eine Richtung gedreht wird, die nahezu parallel zur physikalischen Drehachse ist und/oder die Messergebnisse unter Berücksichtigung der bzgl. der Beleuchtung außermittigen Durchstrahlung des Werkstücks und/oder bzgl. der Beleuchtung vorhandenen Drehung des Detektors korrigiert werden.

Unabhängig hiervon kann die von der physikalischen Drehachse verschiedene Drehachse die virtuelle Drehachse des Werkstücks, vorzugsweise Symmetrieachse sein.

Bevorzugterweise bewegt sich die physikalische Drehachse auf einer geschlossenen glatten Kurve wie elliptischen Bahn, insbesondere Kreisbahn, um die virtuelle Drehachse oder auf einer Geraden, welche vorzugsweise senkrecht zur Detektorebene verläuft.

Mit Hilfe der erfindungsgemäßen Lehre können Strukturen und/oder Geometrien von rotationssymmetrischen Teilen und/oder Werkzeugen und/oder tomographierbaren Teilen bestimmt werden.

Selbständigen Schutz genießt der Gedanke, dass eine Messung ohne vorheriges Ausrichten des Werkstücks zur physikalischen Drehachse erfolgt und während der rotatorischen Bewegung der physikalischen Drehachse eine translatorische Bewegung der physikalischen Drehachse und/oder des Detektors erfolgt, wobei die virtuelle Drehachse durch vor und/oder während der eigentlichen Messung erfolgtes Ausrichten, vorzugsweise mit Hilfe einer CNC-gesteuerten Koordinatenachse, stets mittig zum Detektor angeordnet bleibt.

Erfinderisch ist auch, dass ein Steuerrechner die relative Lage der virtuellen Drehachse zur physikalischen Drehachse im Raum ermittelt und damit die Kombination aus translatorischen und rotatorischen Bewegungen steuert, indem
- in zumindest zwei vorab oder zwischen den eigentlichen Messungen in den verschiedenen Drehstellungen eingenommenen Drehstellungen der physikalischen Drehachse Kontrollmessungen, vorzugsweise Durchstrahlungsbilder, aufgenommenen werden, aus welchen jeweils Lage der virtuellen Drehachse zur physikalischen Drehachse oder zu einem Lage der physikalischen Drehachse charakterisierenden Körper, wie beispielsweise Zylinder oder Dorn, in zumindest einer Koordinate bestimmt wird und die Ergebnisse der Kontrollmessungen kombiniert werden und/oder
- Lage der virtuellen Drehachse zur physikalischen Drehachse durch weitere im Gerät integrierte Sensorik vorab oder während der Messung bestimmt wird.

Bevorzugterweise werden Durchstrahlungsbilder jeweils nur dann aufgenommen, wenn vorab definierte Winkel um die virtuelle Drehachse erreicht sind.

Gleichfalls ist die Möglichkeit gegeben, dass Aufnahmen, vorzugsweise Durchstrahlungsbilder für die verschiedenen Drehstellungen mit unterschiedlichen Strahlenergien aufgenommen werden, wobei nicht für jede Drehstellung Aufnahmen mit allen verwendeten Strahlenergien erfolgen.

Es besteht die Möglichkeit, dass die unterschiedlichen Strahlenergien durch Veränderung der Beschleunigungsspannung und/oder des Röhrenstroms der Strahlung erzeugenden Quelle, vorzugsweise Röntgenröhre, und/oder Variation der eingesetzten Strahlfilter erzeugt werden.

Auch ist vorgesehen, dass die jeweils verwendete Strahlenergie in Abhängigkeit der aktuellen maximal vorhandenen und/oder minimal vorhandenen Durchstrahlungslänge in der jeweiligen Drehstellung und/oder des Werkstückmaterials ausgewählt wird.

Eigenerfinderisch wird gelehrt, dass die zu verwendenden Strahlenergien für zumindest einige Drehstellungen
- aus wenigen vorab aufgenommenen Durchstrahlungsbildern ermittelt werden, indem vorab vorzugsweise automatisch Parameter eingestellt werden, die einen auswertbaren Kontrast auf dem Detektor auslösen, wobei nahezu alle Elemente des Detektors Intensitäten größer eines Minimalwertes und kleiner eines Maximalwertes aufweisen und für alle weiteren Drehstellungen die Strahlenergien interpoliert werden und/oder
- anhand der während der eigentlichen Messung in einer oder mehreren der vorherigen Drehstellungen aufgenommenen Bildern, vorzugsweise durch Mittelwertbildung und/oder Extrapolation ermittelt werden und/oder
- durch ständige oder erst nach mehreren Drehstellungen erfolgende Überwachung der Bildparameter der aufgenommenen Durchstrahlungsbilder, vorzugsweise durch Analyse der Überschreitung der maximalen Intensität und Unterschreitung der minimalen Intensität ermittelt werden und/oder
- anhand vorab bekannter Geometrie- und/oder Materialdaten wie Dichte, vorzugsweise aus dem CAD-Modell des Werkstücks ermittelt werden und vorzugsweise durch Interpolation für die fehlenden Drehstellungen ermittelt werden und/oder
- aus den Werkstückdaten mit Hilfe von Simulation der Abbildung, vorzugsweise durch Simulation der Strahlschwächung, der Streuung und/oder der Detektorempfindlichkeit, ermittelt werden.

Losgelöst hiervon kann vorgesehen sein, dass eine Fusion der mit Hilfe unterschiedlicher Strahlenergien erzeugten Durchstrahlungsbilder durch Anpassung auf das gleiche Strahlintensitätsniveau erfolgt, indem
- virtuell die Durchstrahlungsbilder mit den Strahlenergien, mit denen nicht gemessen wurde, durch Interpolation aus den in benachbarten Drehstellungen ermittelten Durchstrahlungsbildern gleicher Strahlenergie erzeugt werden und/oder
- anhand des Verhältnisses der verwendeten Strahlparameter eine Transformation erfolgt und/oder
- anhand ausgewählter zusammengehöriger Bilderpaare gleicher Drehstellung aber unterschiedlicher Strahlenergien Transformationsgleichungen bestimmt werden, die vorzugsweise für Bilder ähnlicher Strahlenergien und/oder ähnlicher auf dem Detektor vorliegender Intensitätsverteilungen verwendet werden und vorzugsweise fehlende Transformationsgleichungen für weitere Strahlenergien oder Intensitätsverteilungen interpoliert werden.

Es besteht die Möglichkeit, dass die in den mehreren Relativpositionen zwischen Messobjekt, Strahlungsquelle und/oder Detektor, vorzugsweise unterschiedlichen Vergrößerungen aufgenommenen Durchstrahlungsbilder zunächst je Kombination der Relativpositionen zu einem Volumendatensatz rekonstruiert werden, wobei sich diese teilweise überlappen können, um anschließend in einem gemeinsamen Raster im Raum dargestellt zu werden und auswertbar zu sein.

Bevorzugterweise werden in zumindest einer der mehreren Relativpositionen zwischen Messobjekt, Strahlungsquelle und/oder Detektor, vorzugsweise der mit höherer Vergrößerung, ein Teil des Werkstücks in zumindest einer Drehstellung nicht vollständig auf dem Detektor abgebildet, wobei dieser Teil des Werkstücks den verfügbaren Messbereich senkrecht zur virtuellen Drehachse verlässt, und die in den aufgenommenen Durchstrahlungsbildern fehlenden Messwerte aus den Messwerten der Durchstrahlungsbilder, vorzugsweise gleicher Drehstellung, errechnet, vorzugsweise durch Resamplingverfahren und/oder Interpolationsverfahren und/oder Extrapolationsverfahren.

Dabei kann die Darstellung und Auswertung im gemeinsamen Raster im Raum unter Berücksichtigung der Positionen von Messobjekt, Strahlungsquelle und/oder Detektor erfolgen, wobei insbesondere die Ermittlung des gemeinsamen Rasters im Raum anhand der Volumendaten erfolgt, die aus der Messung mit der höchsten Vergrößerung erzeugt wurden.

Die Möglichkeit ist gegeben, dass die Messwerte, vorzugsweise Grauwerte für das gemeinsame Raster durch Merging und/oder Resamplingverfahren, vorzugsweise unter Verwendung von Interpolationsverfahren aus den ursprünglichen Messdaten ermittelt werden, wobei in Überlappungsbereichen vorzugsweise eine gewichtete Mittelung der Messwerte erfolgt, wobei vorzugsweise der Gewichtung in Abhängigkeit zum Abstand zu den Überlappungsgrenzen erfolgt.

Bevorzugterweise wird durch die verschiedenen Relativpositionen zwischen Messobjekt, Strahlungsquelle und/oder Detektor ein Messbereich erzeugt, der größer als der durch einen fest stehenden Detektor abgedeckte Messbereich ist, indem vorzugsweise eine Relativbewegung zwischen Messobjekt und zumindest dem Detektor in zumindest einer nahezu senkrecht zur Abbildungsachse liegenden Richtung erfolgt.

Eine Anordnung zur Bestimmung von Strukturen und/oder Geometrie eines Objektes mittels eines Messsystems, vorzugsweise computertomographischen Messsystems, bestehend aus zumindest einer Strahlungsquelle, zumindest einem Strahlungsdetektor und zumindest einer Drehachse, zeichnet sich dadurch aus, dass das Werkstück, mithilfe einer Kombination aus rotatorischer und translatorischer Relativbewegung zwischen Werkstück und Detektor, um eine von der physikalischen Drehachse verschiedene Drehachse drehbar ist.

Dabei kann die physikalische Drehachse in zumindest einer translatorischen Richtung verstellbar sein und/oder das Messobjekt in zumindest einer translatorischen Richtung verstellbar auf der physikalischen Drehachse angeordnet sein und/oder der Detektor in zumindest einer translatorischen und oder rotatorischen Achse verstellbar sein.

Auch besteht die Möglichkeit, dass die physikalische Drehachse in zwei translatorischen Richtungen verstellbar ist, wobei die erste Richtung nahezu senkrecht zur Detektorebene verläuft und die zweite Richtung nahezu senkrecht zur Richtung der physikalischen Drehachse und nahezu senkrecht zur Normalen der Detektorebene verläuft.

Ferner sieht die Erfindung vor, dass die physikalische Drehachse nahezu senkrecht zur Detektorebene verstellbar ist und der Detektor in zumindest einer in der Detektorebene verlaufenden Richtung verstellbar ist, die nahezu senkrecht zur Richtung der physikalischen Drehachse verläuft, und vorzugsweise der Detektor um eine Achse drehbar ist, die nahezu parallel zur Drehachse verläuft.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden Ausführungsbeispiels.

Es zeigen:
- Fig. 1: eine CT-Messanordnung in Prinzipdarstellung,
- Fig. 2: eine Messanordnung mit einem Werkstück in zwei verschiedenen Stellungen,
- Fig. 3: eine Prinzipdarstellung des CT-Detektors gemäß Fig. 2,
- Fig. 4: Kennlinien von Pixeln oder Gruppen von Pixeln in prinzipieller Darstellung,
- Fig. 5: den Intensitätsverlauf gemessener Strahlung in Abhängigkeit des ein Werkstück durchdringenden Orts,
- Fig. 6: Ortskoordinaten eines Werkstücks entsprechend der Fig. 5,
- Fig. 7: eine Prinzipdarstellung einer CT-Messanordnung mit dem Werkstück gemäß Fig. 6,
- Fig. 8: eine weitere Prinzipdarstellung einer CT-Messanordnung mit einem Werkstück, insbesondere zur Berücksichtigung der der Taumelbewegungen bei der Drehung des Messobjektes und Verlagerung des Brennfleckes der Röntgenröhre,
- Fig. 9: eine weitere Ausführungsform eines Koordinatenmessgerätes,
- Fig. 10: eine weitere Ausführungsform eines Koordinatenmessgerätes,
- Fig. 11: einen Computertomografie-Sensor in Prinzipdarstellung,
- Fig. 12: einen prinzipiellen Verlauf einer Intensitätsverteilung in Abhängigkeit von durchstrahlter Länge am Stützpunkt,
- Fig. 13: eine Messanordnung mit einem Werkstück in zwei verschiedenen Stellungen,
- Fig. 14: eine erste Ausführungsform einer Anordnung eines um eine virtuelle Drehachse drehbaren Objekts,
- Fig. 15: eine zweite Ausführungsform einer Anordnung eines um eine virtuelle Drehachse drehbaren Objekts,
- Fig. 16: eine erste Anordnung des Werkstücks zur Messung dessen in seiner Gesamtheit bzw. eines Details von diesem und
- Fig. 17: eine Anordnung zur kompletten Messung eines Werkstückes in zwei nacheinander aufzunehmenden Messungen in gleicher Vergrößerung.

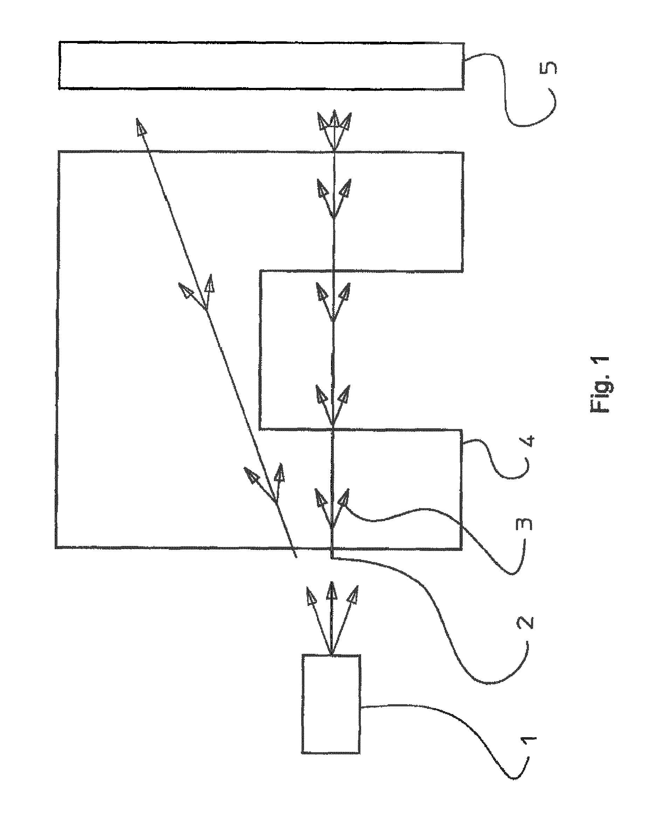

In der Fig. 1 ist rein beispielhaft und prinzipiell eine CT Messanordnung dargestellt, die Teil eines Koordinatenmessgeräts sein sollte, um Werkstücke 4 zu messen. Die Anordnung umfasst eine Röntgenquelle 1 und einen Pixel aufweisenden Röntgendetektor 5, zwischen denen das zu messende Werkstück bzw. Bauteil 4 angeordnet ist. Die die Röntgenquelle 1 verlassende Röntgenstrahlung 2 durchdringt das Bauteil 4 dabei auf unterschiedlichen Wegen, wobei an den Grenzflächen des Bauteils 4 - wie auch innerhalb des Bauteils 4 - Streustrahlungen oder anderwertige Artefakte entstehen können, die abhängig von der in der Strahlungsrichtung vorliegenden Geometrie der Strahlungslängen unterschiedlich auftreten.

Um bei der CT Messung auftretende Artefakte wirksam zu korrigieren, ist nun vorgesehen, dass für die Korrektur der Messwerte der einzelnen Pixel oder Gruppen von Pixeln des eingesetzten CT Detektors, also des Röntgendetektors 5 unterschiedliche Kennlinien verwendet werden. Dabei werden zur Bestimmung der einzelnen Kennlinien die unterschiedlichen messtechnischen Eigenschaften der einzelnen Pixel oder Gruppen von Pixeln und/oder Artefakte bei der computertomografischen Abbildung ermittelt. In den Kennlinien werden die Einflüsse durch Artefakte berücksichtigt, indem die den einzelnen Pixeln oder Gruppen von Pixeln zugeordneten Durchstrahlungslängen und/oder die Geometrie des Werkstücks 4 in den verschiedenen Drehstellungen zur Aufnahme der verschiedenen Projektionsdaten während der CT Messung bestimmt wird.

Die Bestimmung der Durchstrahlungslängen und/oder der Geometrie des Werkstücks 4 in den verschiedenen Drehstellungen kann anhand von nahezu vollständig vorliegenden Projektionsdaten oder anhand eines CAD Modells erfolgen.

Zur Korrektur von Artefakten aus den zuvor bestimmten Durchstrahlungslängen und/oder der in der jeweiligen Durchstrahlungsrichtung vorliegenden charakteristischen Geometrie werden eine oder mehrere Parameter abgeleitet, die sodann in den Kennlinien berücksichtigt werden.

Insbesondere werden die Parameter aus der charakteristischen Geometrie abgeleitet, indem aus der Geometrie und/oder Materialabfolge die durchstrahlten Strecken je Materialart und Anordnung erfasst werden und hieraus auf die Ausbildung von Artefakten wie Streustrahlungs- und Strahlaushärtungsartefakten geschlussfolgert wird.

Alternativ können die Parameter aus der charakteristischen Geometrie abgeleitet werden, indem aus der Geometrie und/oder Materialabfolge eine gewichtete mittlere Durchstrahlungslänge der einzelnen Materialabschnitte oder ein anderweitig analytisch gebildetes Kontrastverhältnis, z. B. mit Hilfe von Simulation ermittelt wird und hieraus auch die Ausbildung von Artefakten wie Streustrahlungs- und Strahlaushärtungsartefakten geschlussfolgert wird. Dabei sollten auch unterschiedliche Korrekturkennlinien in Abhängigkeit von der Drehstellung und/oder Position des Werkstücks, also des Bauteils 4 ermittelt und verwendet werden.

Die Auswahl und Zuordnung der jeweiligen Kennlinie für die einzelnen Detektorpixel und/oder Gruppen von Pixeln des Röntgendetektors 5 in den jeweiligen Drehstellungen und der Position des Werkstücks 4 erfolgt durch Ausrichtung zum Werkstück.

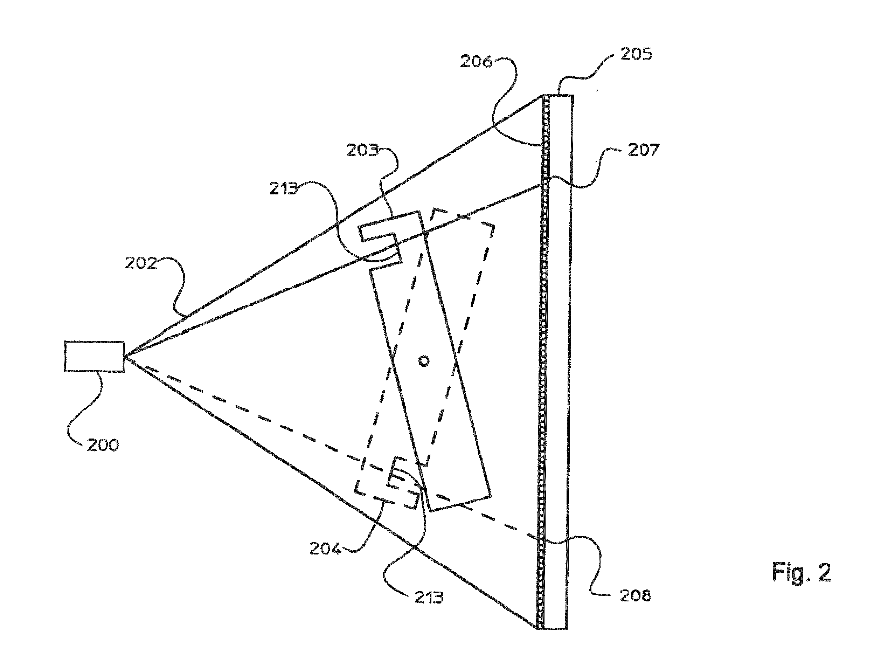

In Fig. 2 ist rein prinzipiell ein Werkstück 203 dargestellt, welches von der aus einer CT-Röhre (Röntgenquelle) 200 abgestrahlten Röntgenstrahlung 202 durchdrungen wird, wobei die Röntgenstrahlen 202 auf einem Detektor 205 auftreffen. In einer ersten Stellung des Werkstücks 203 werden Röntgenstrahlen, die einen Bereich 213 des Werkstücks 203 durchdringen, von dem Detektorpixel (X, Y) 207 detektiert, während in einer zweiten abweichenden Stellung des Werkstücks 204 derselbe Bereich 213 durchstrahlt, jedoch von dem Pixel (X+N, Y+M) 208 detektiert wird. Das Detektorpixel (X, Y) 207 detektiert Röntgenstrahlung, die einen anderen Bereich des Werkstücks 203, 204 durchdrungen hat, welcher sich insbesondere in der durchstrahlten Länge und/oder der durchstrahlten Materialabfolge unterscheidet. Artefakte, welche von der durchstrahlten Länge und/oder Materialabfolge abhängen, wie beispielsweise Strahlaufhärtungs- oder Streustrahlungsartefakte, äußern sich damit in den verschiedenen Drehstellungen des Werkstücks unterschiedlich. Um diese Abhängigkeit zu berücksichtigen, ist erfindungsgemäß u. a. vorgesehen, dass unterschiedliche Kennlinien für die unterschiedlichen Pixel oder Gruppen von Pixeln, auch in unterschiedlichen Drehstellungen oder Positionen des Werkstücks ermittelt und berücksichtigt werden, welche den Zusammenhang zwischen durchstrahlter Bauteillänge und/oder Materialabfolge und detektierter Strahlungsintensität beschreiben.

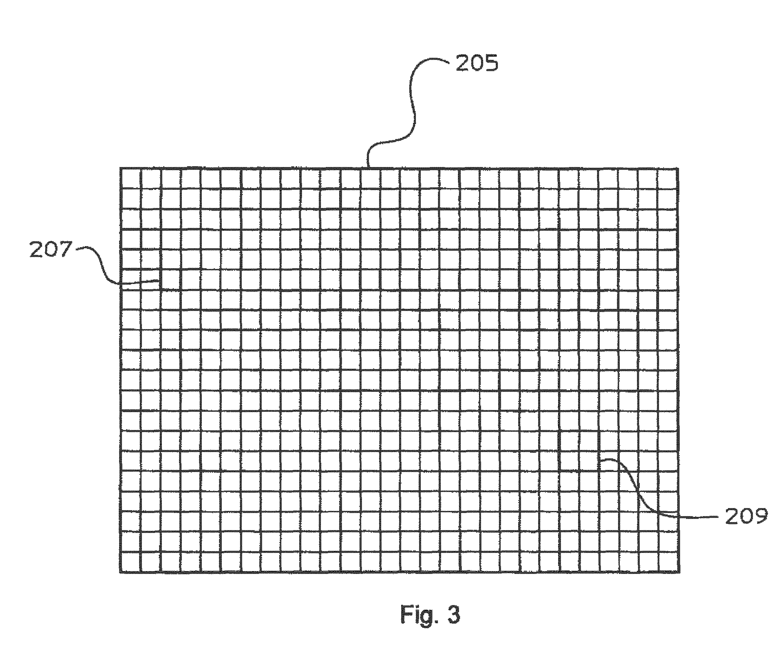

So zeigt Fig. 3 den CT-Detektor 205 und ein einzelnes Pixel 207 bzw. eine Gruppe von Pixeln 209. Für die einzelnen Pixel 207 oder Gruppen von Pixeln 208 können erfindungsgemäß unterschiedliche Kennlinien verwendet werden, die den Zusammenhang der durchstrahlten Bauteillänge L bzw. der Materialabfolge und der detektierten Strahlungsintensität I beschreiben.

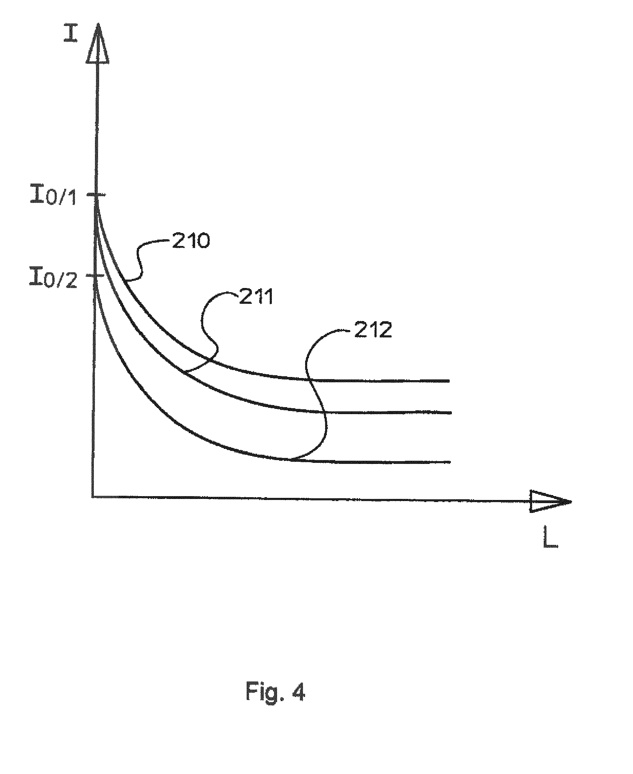

Beispielhaft sind in Fig. 4 drei unterschiedliche Kennlinien 210, 211 und 212 dargestellt. Diese können sich aufgrund der physikalischen Eigenschaften der einzelnen Pixel oder Gruppen von Pixeln und/oder der durchstrahlten Weglänge des Werkstücks bzw. der Materialabfolge innerhalb des Werkstücks zum Beispiel in der Anfangsintensität I0/1 bzw. I0/2 aber auch in ihrem Anstiegsverhalten oder der Linearität unterscheiden.

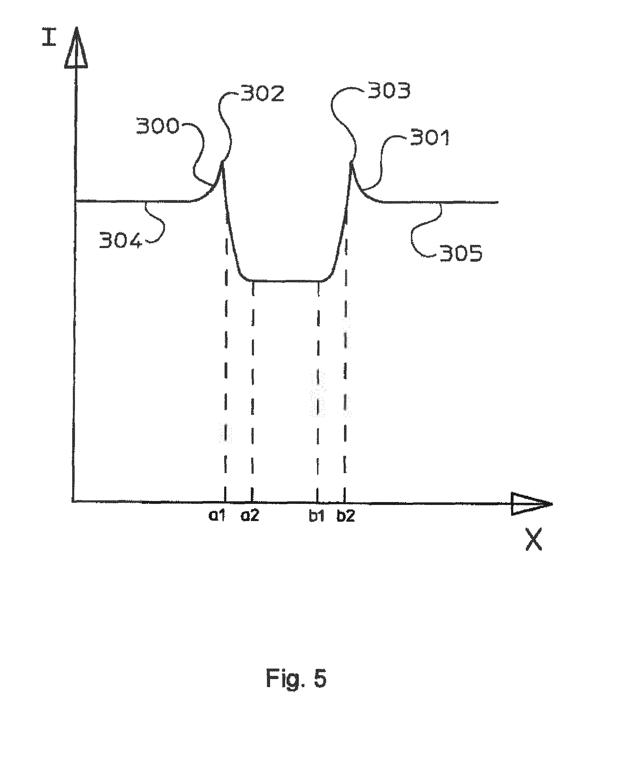

Anhand der Fig. 5 bis 7 soll beispielhaft erläutert werden, wie die Intensität einer Streustrahlung ermittelt wird, um diese sodann zurück zur Korrektur zu verwenden.

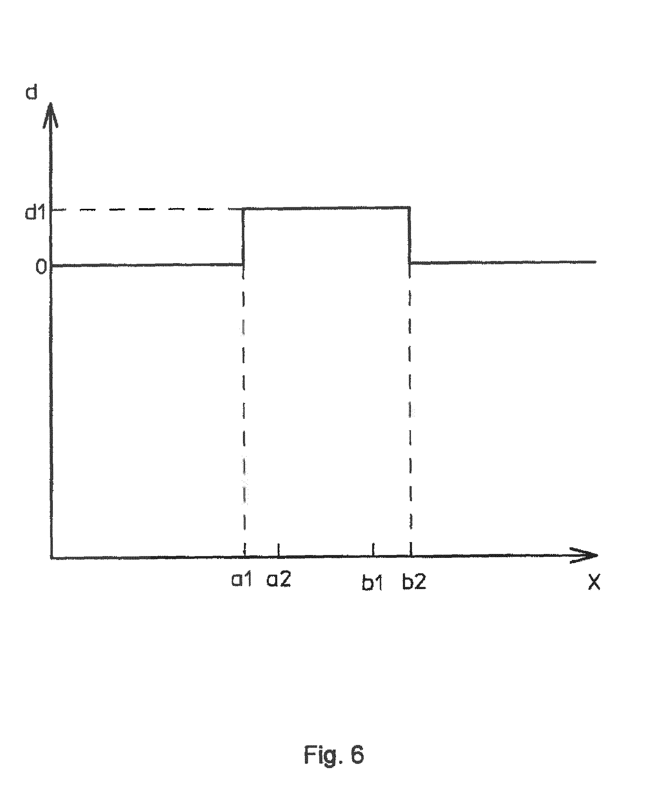

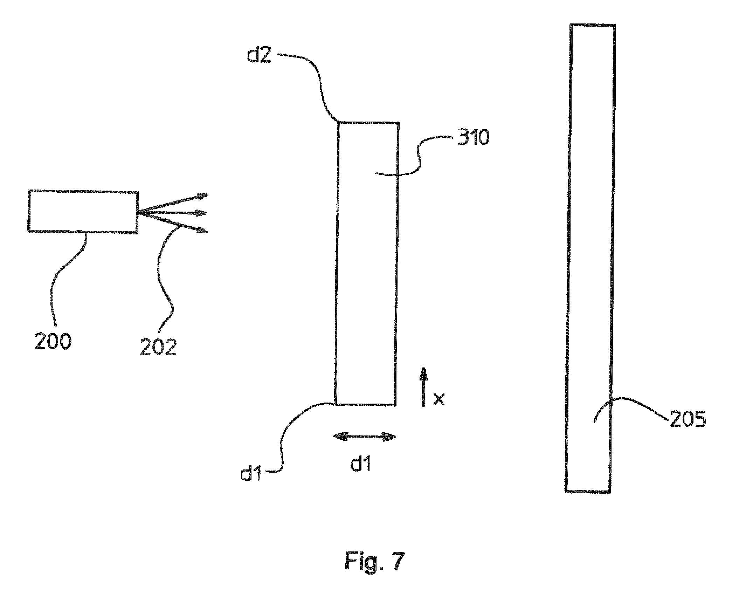

In Fig. 5 ist beispielhaft der Verlauf der Intensität I in Abhängigkeit des Orts x für einen Querschnitt durch ein einzelnes Durchstrahlungsbild eines Werkstücks 310 wiedergegeben, das in den Fig. 6 und 7 näher dargestellt ist. Das Werkstück 310 ist gemäß Fig. 7 zwischen der Röntgenquelle 200 und dem Detektor 205 entsprechend der zeichnerischen Darstellung angeordnet und wird von der Strahlung 202 der Röntgenquelle 200 durchdrungen. Zwischen den Orten a1 und b2 weist das Werkstück 310 in Durchstrahlungsrichtung die Dicke d1 auf. In Fig. 6 ist noch einmal die Dicke des Werkstücks 310 in Abhängigkeit des Orts x dargestellt. Entsprechend der Darstellung in Fig. 5 und 6 befinden sich die Kanten des Werkstücks 310 im Bereich zwischen dem Ort a1 und a2 beziehungsweise dem Ort b1 und b2. Zwischen beiden Kantenorten ist eine deutlich niedrigere Intensität vorhanden als in den Bereichen 304 und 305 weit außerhalb des Werkstücks 310. Außerhalb des Werkstücks 310, jedoch nahe der Kantenorte, befinden sich die Bereiche 300 und 301 mit erhöhter Intensität, welche beispielsweise durch Streustrahlungen ausgelöst werden können. Die Maxima 302 und 303 können verwendet werden, um die Intensität der Streustrahlung im Vergleich zur Intensität des ungeschwächten Röntgenstrahls aus den Bereichen 304 und 305 zu bestimmen. Detektorpixel die zwischen den Orten a1 und b2 angeordnet sind, können um die Streustrahlungsamplitude korrigiert, zum Beispiel vermindert, werden. Die Korrektur kann dabei auf alle Pixel gleichmäßig angewendet werden oder in Abhängigkeit der vorliegenden Durchstrahlungslängen beziehungsweise der durchstrahlten Strecke je Materialart.

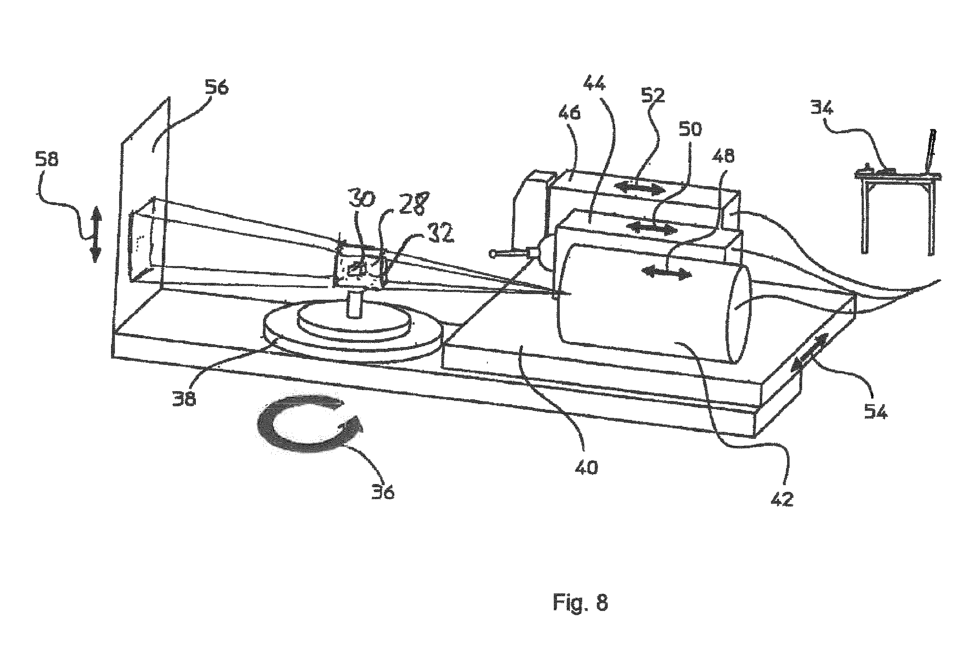

Ein Multisensor-Koordinatenmessgerät zur Berücksichtigung der Taumelbewegungen bei der Drehung des Messobjektes oder Verlagerungen zwischen der Röntgenröhre, insbesondere des Brennflecks der Röntgenröhre, und dem Röntgendetektor ist rein prinzipiell der Figur 8 zu entnehmen, mit dem eine vollständige dimensionelle Messung eines Werkstücks 28 durchgeführt werden kann, das z. B. aus einem Kern 30 und diesen umgebender Umhüllung 32 besteht. Die Materialien von Kern 30 und Umhüllung 32 weichen in ihren Dichten ab. So kann der Kern 30 z. B. aus Metall und die Umhüllende 32 aus Kunststoff oder einem sonstigen leichteren Werkstoff bestehen.

Das Koordinatenmessgerät ist mit einer Auswerteeinheit 34 mit Steuerungs-, Hard- und Software sowie Speichereinheit zum Speichern von Messpunkten verbunden. Ferner ist eine Ein- und Ausgabeeinheit für einen Bediener vorhanden.

Das Werkstück 28 wird auf einem drehbaren Tisch 38 angeordnet. Auf einem Träger 40 sind eine Röntgenquelle 42 sowie beispielhaft ein taktiler Sensor 44 sowie ein Laserliniensensor 46 angeordnet, die entlang Verfahrachsen auf dem Träger 40 verschiebbar angeordnet sind (Doppelpfeile 48, 50, 52). Der Träger selbst ist entlang einer senkrecht zu den Verfahrachsen 48, 50, 52 verlaufenden Achsen 54 verstellbar.

Auf der im Bezug auf die Röntgenquelle 42 gegenüberliegenden Seite des Werkstückes 28 ist ein Röntgendetektor 56 angeordnet. Dabei kann in Abhängigkeit von den Messaufgaben der Detektor 56 senkrecht zu den Verfahrachsen 48, 50, 52, 54 und gegebenenfalls parallel zu der Verfahrachse 54 des Trägers 40 verstellbar sein.

In diesem Ausführungsbeispiel wird das Werkstück 28 von der von der Röntgenquelle 32 emittierten Röntgenstrahlung durchstrahlt. Die das Werkstück 28 durchsetzende Strahlung wird sodann vom Detektor 56 erfasst. Um die zur Rekonstruktion dienenden Durchstrahlungsbilder in den verschiedenen Drehstellungen des Werkstücks 28 eindeutig im Raum zueinander zuzuordnen und somit Messungenauigkeiten durch etwaige Taumelbewegungen bei der Drehung des Werkstücks 28 oder Verlagerungen zwischen der Röntgenquelle bzw. Röntgenröhre 42, insbesondere dessen Brennflecks, und dem Röntgendetektor 56 auszuschließen bzw. in einem Umfang zu minimieren, dass die gewünschte Messgenauigkeit sichergestellt ist, werden Vorab-Informationen berücksichtigt, mittels der die Durchstrahlungsbilder beim eigentlichen Messvorgang korrigiert werden. Hierzu werden zunächst eine oder mehrere Vorab-Durchstrahlungsbilder des Werkstücks 28 oder Teile dieses aufgenommen. Um Drifterscheinungen bei den Vorab-Aufnahmen zu minimieren, werden nur einige wenige Durchstrahlungsbilder in den wenigen verschiedenen Stellungen aufgenommen. Durch einen Vergleich zwischen den vorab aufgenommenen Durchstrahlungsbildern bzw. Teilen davon und den während der Messung aufgenommen Durchstrahlungsbildern bzw. Teilen davon können z. B. mit Hilfe von Korrelationsverfahren eine Verschiebung oder Skalierungsabweichungen erkannt und korrigiert werden. Dies kann z. B. durch Re-Sampling-Verfahren oder Positionierung der Röntgenquelle 42 relativ zum Röntgendetektor 56 und/oder dem Werkstück 28 erfolgen.

Zur Messung eingesetzte Durchstrahlungsbilder, für die kein Vorab-Durchstrahlungsbild vorliegt, werden mit Hilfe von Interpolations-Verfahren aus vorab aufgenommenen Durchstrahlungsbildern benachbarter Drehstellungen des Werkstücks 28 korrigiert. Insbesondere ist vorgesehen, dass 20 bis 70 Vorab-Durchstrahlungsbilder aufgenommen werden im Vergleich zu 100 bis 1.600 Durchstrahlungsbildern, die zur Messung des Werkstücks 28 typischerweise erforderlich sind.

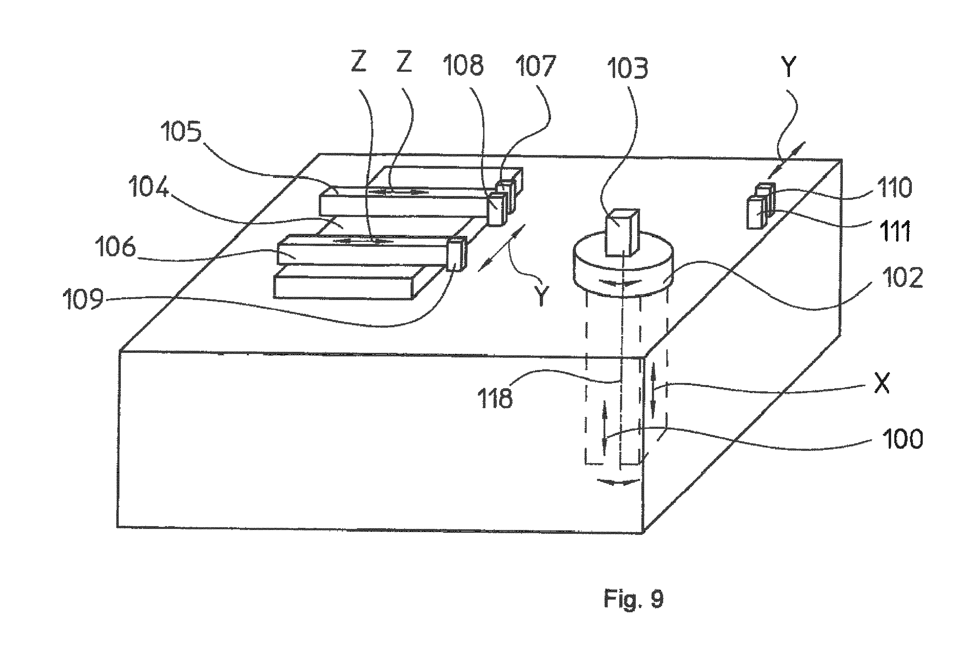

In der Fig. 9 ist rein prinzipiell ein Koordinatenmessgerät für den gegebenenfalls kombinierten Einsatz von Röntgensensorik und optischer und/oder taktiler Sensorik dargestellt.

Auf einer parallel zur X-Achse des Koordinatenmessgeräts verlaufenden Achse 118 ist ein Drehtisch 110 angeordnet. Auf diesem befindet sich ein Messobjekt 103 und kann somit um die Drehachse 118 rotiert werden und in X-Richtung durch die Achse 118 verschoben werden (Doppelpfeil). Auf einem parallel zu Y-Achse verlaufenden Schieber 104 sind zwei parallel zur Z-Achse verlaufende Achsen 105, 106 angeordnet. Auf der mechanischen Achse 105 befindet sich ein Sensor 107 für Röntgenstrahlung und ein Bildverarbeitungssensor 108. Auf der mechanischen Achse 106 befindet sich zusätzlich ein taktiler Sensor 109. Gegenüber dem Röntgensensor 107 ist eine Röntgenquelle 110 angeordnet, die wahlweise in Y-Richtung bewegbar oder fest angebracht sein kann. Gegenüber der Bildverarbeitungssensorik 108 befindet sich eine Durchlichtquelle 111. Die mechanischen Achsen bzw. Schieber, die entlang der X-, Ybzw. Z-Achse des Koordinatenmessgerätes verlaufen, sind so ausgelegt, dass die in bzw. auf dem Koordinatenmessgerät installierten Sensoren jeweils den gesamten Messbereich auf dem Drehtisch 102 überdecken können.

Durch die Integration der Computer-Tomographie (CT) in ein Multisensor-Koordinatenmessgerät werden völlig neue Möglichkeiten geschaffen. Eine schnelle, zerstörungsfreie Komplettmessung mit der Tomographie wird mit hochgenauen Messungen von Funktionsmaßen mit taktiler oder optischer Sensorik vereint. Dabei kann vorgesehen sein, dass die Röntgensensorik (Sensor, Strahlenquelle) entsprechend der zweiten Sensorik (z. B. Bildverarbeitungssensor, Durch- oder Auflichtstrahlenquelle oder taktiler Sensor gegebenenfalls mit zugeordnetem Bildverarbeitungssensor) in dem Koordinatenmessgerät positionierbar ist, dass also gleichwertig zur zweiten Sensorik die Röntgensensorik angeordnet ist. Dabei kann die Röntgensensorik mit zumindest der taktilen Sensorik und/oder der optischen Sensorik auf einer gemeinsamen mechanischen Achse angeordnet bzw. auf einer separaten mechanischen Achse angeordnet sein, die in analoger Weise wie die mechanischen Achsen für die taktile und/oder optische Sensorik arbeitet. Die Auslegung des Fig. 9 zu entnehmenden Koordinatenmessgerätes als Multisensorkoordinatenmessgerät ist nicht zur Verwirklichung aller Teile der erfindungsgemäßen Lehre erforderlich. Vielmehr ist allein sicherzustellen, dass eine Computertomografie durchgeführt werden kann.

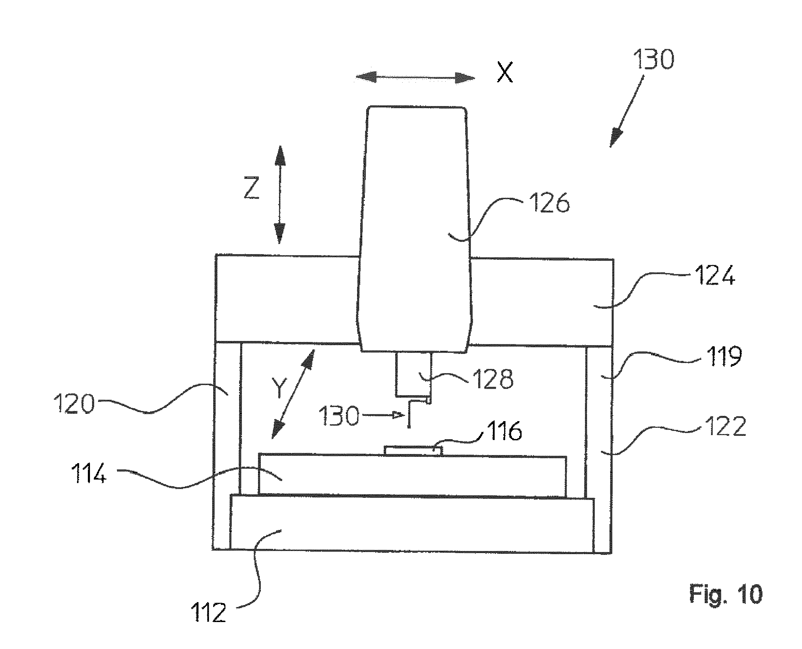

In Fig. 10 ist rein prinzipiell eine weitere Ausführungsform eines Multisensor-Koordinatenmessgerätes 130 dargestellt. Die Sensoren können wahlweise montiert oder demontiert werden oder über entsprechende Sensorwechselsysteme auch während des Betriebes automatisch ein- und ausgewechselt werden. Selbstverständlich wird die Erfindung nicht verlassen, wenn eine entsprechende Anzahl von ausgewählten Sensoren fest auf dem Gerät montiert gelassen wird, um in dieser Konfiguration Objekte zu messen.

Das hinlänglich bekannte und noch einmal in der Fig. 10 wiedergegebene Prinzip eines Koordinatenmessgerätes 130 umfasst einen z. B. aus Granit bestehenden Grundrahmen 112 mit Messtisch 114, auf dem ein zu messendes Objekt 116 positioniert wird, um dessen Oberflächeneigenschaften zu messen.

Entlang dem Grundrahmen 112 ist ein Portal 119 in Y-Richtung verstellbar. Hierzu sind Säulen oder Ständer 120, 122 gleitend am Grundrahmen 112 abgestützt. Von den Säulen 120, 122 geht eine Traverse 124 aus, entlang der ein Schlitten verfahrbar ist, der seinerseits eine Pinole oder Säule 126 aufnimmt, die in Z-Richtung verstellbar ist. Von der Pinole 126 bzw. gegebenenfalls einer mit der Pinole 126 verbundenen Wechselschnittstelle 128 geht ein Sensor 130 aus, der als taktiler Sensor ausgebildet sein kann, der dann, wenn die Pinole 126 einen Bildverarbeitungssensor enthält, taktiloptisch misst. Insoweit wird jedoch auf hinlänglich bekannte Techniken verwiesen, genauso wie in Bezug auf weitere zum Einsatz gelangende Sensoren wie Laserabstandssensor, Weißlichtinterferometer, Bildverarbeitungssensoren, Röntgensensorik oder chromatischer Fokussensor oder konfokal Scanning-Messkopf, ohne dass hierdurch eine Einschränkung der erfindungsgemäßen Lehre erfolgt. Der bzw. die Sensoren werden entsprechend der Messaufgabe ausgewählt und eingesetzt, um das Koordinatenmessgerät 130 für die jeweilige Messaufgabe optimal zu konfigurieren. Gleichzeitig werden Probleme gelöst, die bei üblichen Koordinatenmessgeräten auftreten.

Um das Koordinatenmessgerät 130 mit dem geeigneten Sensor nutzen zu können, kann das Koordinatenmessgerät einen Sensorwechsler aufweisen. Somit können mehrere Sensoren jeweils wahlweise über eine Wechselschnittstelle mit dem Koordinatenmessgerät 130 versehen und von Hand oder durch automatisches Abholen von einer Parkstation ausgewechselt werden.

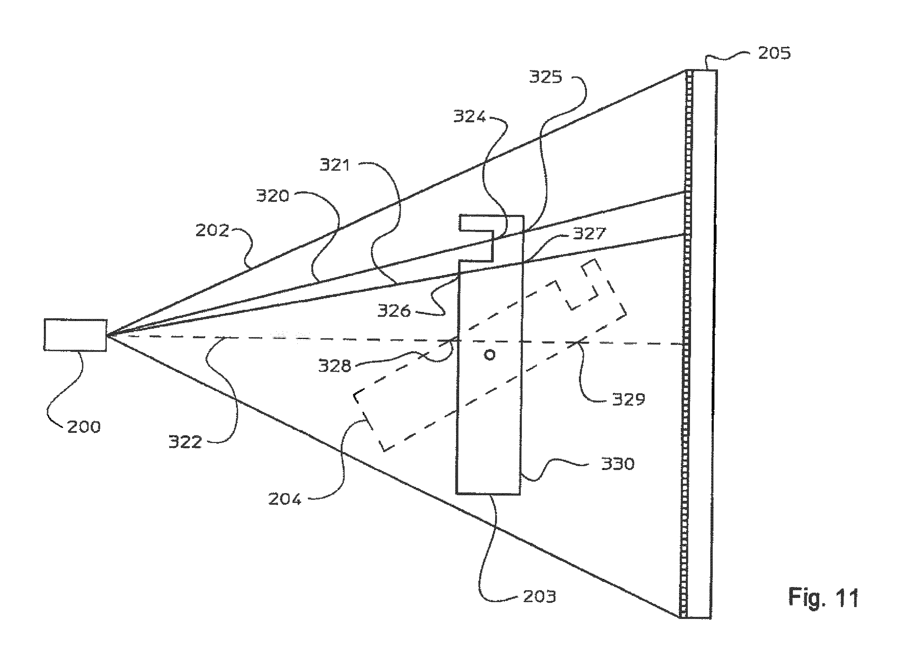

Fig. 11 zeigt eine prinzipielle Darstellung eines Computertomografie-Sensors. Die die Röntgenquelle 200 verlassende Strahlung 202 durchdringt dabei ein Werkstück 203 und trifft danach auf einen Detektor 205. Um den erfindungsgemäßen Zusammenhang zwischen den von dem Detektor 205 ermittelten Schwächungswerten und der korrespondierenden durchstrahlten Längen des Werkstücks bzw. Bauteils 203 herzustellen, werden Durchstoßpunkte 324, 325 für den Strahl 320 beispielsweise mit einem optischen oder taktilen Sensor gemessen. Weitere Stützwerte für die Korrekturkennlinie, also andere Durchstrahlungslängen, können beispielsweise unter Nutzung eines Strahls 321 und der Messung von Durchstoßpunkten 326, 327 oder auch unter Verwendung eines Strahls 322 und von Durchstoßpunkten 328, 329 durch das Messobjekt bei veränderter Drehlage 204 ermittelt werden.

Eine alternative Möglichkeit zur Bestimmung der Durchstrahlungslänge zwischen Durchstoßpunkten, z. B. 326 und 327, besteht in der Ermittlung der Koordinaten der Durchstoßpunkte durch mathematische Verknüpfung von taktil und/oder optisch gemessenen Elementen, z. B. Ebenen oder Zylindern, und/oder Handelementen. Beispielsweise kann die Koordinate des Durchstoßpunktes 327 durch Schneiden einer taktil und/oder optisch gemessenen Ebene 330 mit einer Handgeraden ermittelt werden, welche entlang des Strahls 321 verläuft.

Die zwischen diesen Durchstrahlungslängen auftretenden Längen können durch Interpolation ermittelt werden. Ebenso ist es möglich, größere oder kleinere Durchstrahlungslängen durch Extrapolation zu ermitteln und mit den Schwächungswerten des Detektors in funktionalen Zusammenhang zu bringen.

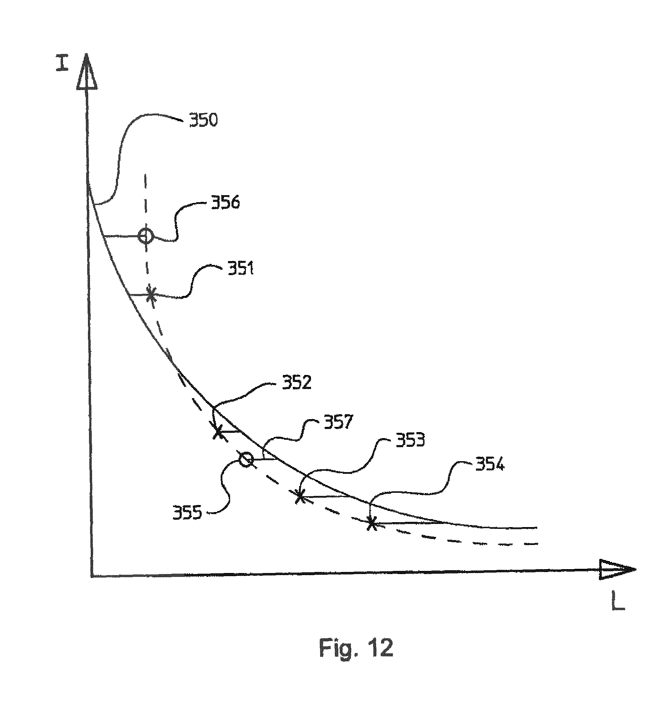

Fig. 12 zeigt dazu den Zusammenhang zwischen der durchstrahlten Länge L und der vom Detektor ermittelten Intensität I. Ausgehend von einer analytisch oder in Form eines Look-up-Tables (LuT) vorliegenden Kennlinie 350 werden zunächst Korrekturwerte für die diskreten gemessenen Punkte 351 bis 354 als Differenzlänge zur vorhandenen Kennlinie bestimmt. Für zwischen diesen Stützpunkten liegende Intensitäten, beispielsweise jene, die durch den Punkt 355 charakterisiert wird, wird die Korrektur 357 durch Interpolation des Punktes 355 ermittelt. Gleiches gilt für außerhalb der Stützpunkte liegende Intensitäten, beispielsweise jene, die durch den Punkt 356 verläuft unter Anwendung von Extrapolationsverfahren. Die den einzelnen Intensitäten zugeordneten Korrekturwerte werden in Form von analytischen Funktionen oder Wertetabellen LuT hinterlegt und angewendet.

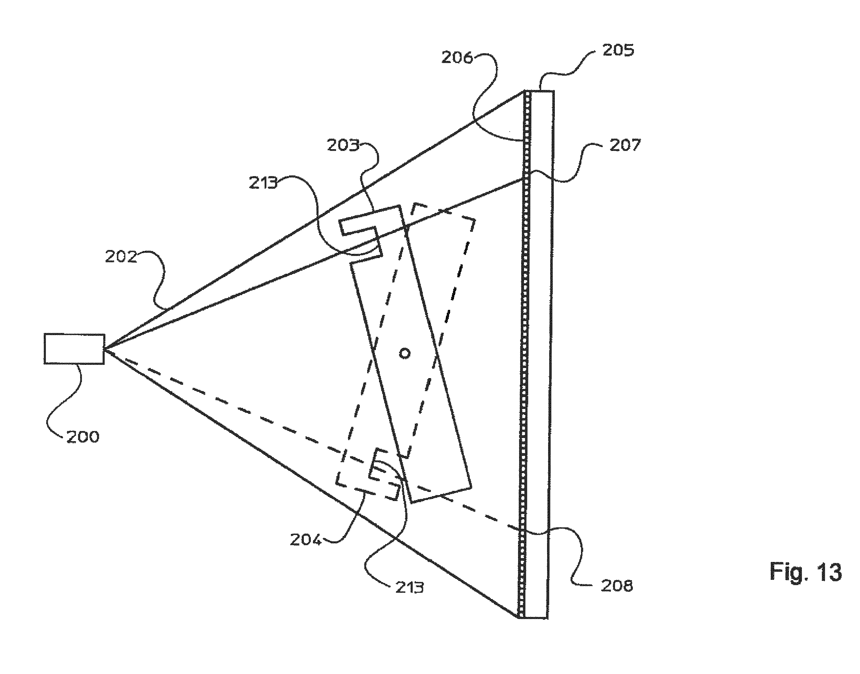

Anhand der Fig. 13, die identisch mit Fig. 2 ist, sollen weitere wesentliche Aspekte der erfindungsgemäßen Lehre zur Durchführung einer Computertomografie erläutert werden. So ist in Fig. 13 rein prinzipiell ein Objekt oder Werkstück 203 dargestellt, welches von einer aus einer CT-Röhre 200 emittierten Röntgenstrahlung 202 durchdrungen wird, wobei die Röntgenstrahlung 202 auf einen Detektor 205 auftrifft. In einer ersten vorab eingestellten Drehstellung des Werkstücks 203 durchdringt die vom Detektorpixel 207 des Detektors 205 empfangene Strahlung das Messobjekt 203 einen Bereich 213 und erzeugt einen entsprechenden charakteristischen Grauwert auf dem Detektorpixel 207. In weiteren Drehstellungen, z. B. einer Drehstellung 204, entstehen weitere charakteristische Grauwerte für die verschiedenen Detektorpixel, z. B. das Detektorpixel 207 oder 208. Wird in den verschiedenen Drehstellungen zumindest ein Bereich von 0 bis 90 Grad überdeckt, so sind die kürzeste und die längste Durchstrahlungslänge zumindest einmal in der Abbildung auf dem Detektor 205 enthalten. Dadurch wird ein hellstes und ein dunkelstes Pixel und daraus ein Kontrastwert berechnet bzw. ein Histogramm der Pixelgrauwerte zur statistischen Auswertung. Ist das hellste Pixel größer als ein vorgegebener Maximalwert, also das Bild beispielsweise teilweise übersteuert, so werden beispielsweise automatisch Parameter wie Strom der CT-Röhre 200 und/oder Integrationszeit verringert, um sodann erneut vorab Vorab-Durchstrahlungsbilder aufzunehmen.

Beim Auftreten von Pixeln unterhalb eines vorgegebenen Grenzwertes wird beispielsweise der Parameter der Anzahl der Bildmittelungen automatisch erhöht, wodurch sich der Signalrauschabstand erhöht, also verbessert, um sodann erneut Vorabdurchstrahlungsbilder aufzunehmen.

Befindet sich beispielsweise eine sehr große Anzahl von sehr dunklen Pixeln im ausgewerteten Bildbereich, so erfolgt eine Erhöhung der Beschleunigungsspannung der CT-Röhre 200 automatisch und danach werden erneut Vorabbilder aufgenommen. Das umgekehrte Vorgehen wird bei einer sehr hohen Anzahl von sehr hellen Pixeln durchgeführt.

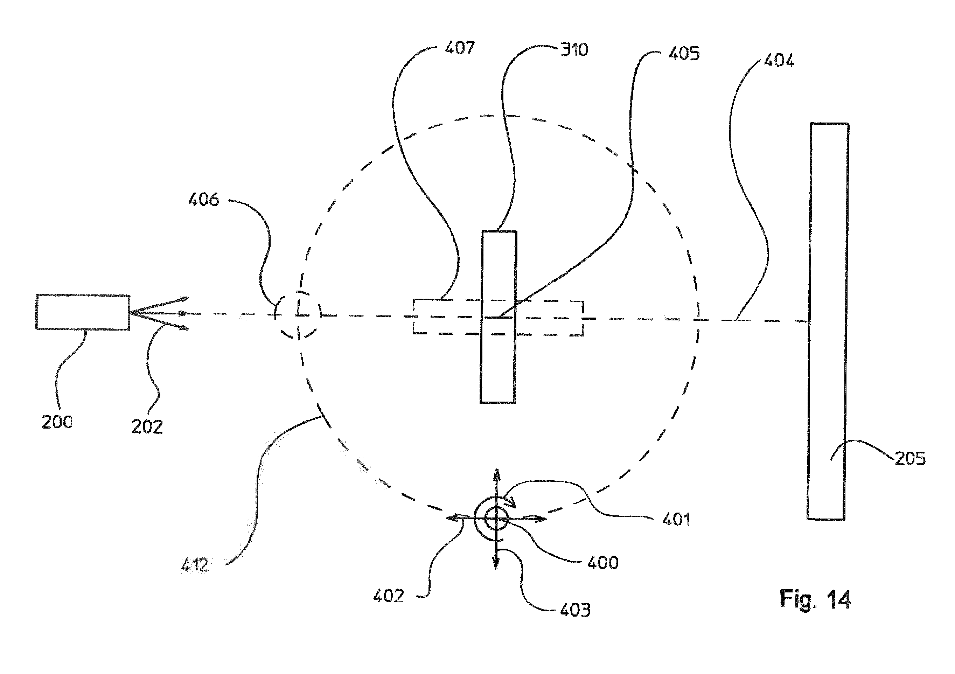

Figur 14 zeigt eine Röntgenstrahlquelle 200 und eine von ihr ausgehende Messstrahlung 202, einen Röntgendetektor 205 und ein zwischen diesen angeordnetes Werkstück 310 in einer ersten Messstellung, welches mit der physikalischen Drehachse 400 fest verbunden ist. Die erste Messstellung wird eingenommen, indem durch Bewegung der physikalischen Drehachse 400 in Richtung des Pfeils 403 (in der Zeichnung vertikal verlaufend) die virtuelle Drehachse 405, die etwa der Symmetrieachse des Werkstücks 310 entspricht, etwa mittig zum Detektor 205 ausgerichtet wird, sich also mit der mittleren Strahlachse 404 etwa schneidet. Durch Drehung der physikalischen Drehachse 400 (in der Zeichnung um eine die Zeichenebene senkrecht schneidende Achse) in Richtung des Pfeils 401 wird in mehreren, typischerweise 100-1600 Schritten bis hin zu 360° Durchstrahlungsbilder des Werkstücks 310 aufgenommen. Damit in allen Drehstellungen das Werkstück auf dem Detektor komplett abgebildet wird, wird gleichzeitig die das Werkstück 310 tragende Drehachse 400 in Richtung der Pfeile 402 (in der Zeichnung horizontal verlaufend) und 403 so bewegt, dass die virtuelle Drehachse 405 in allen Drehstellungen die gleiche Lage zum Detektor 205 einnimmt.

Für die 90°-Stellung beispielhaft ist die Position der physikalischen Drehachse 406 und des Werkstücks 407 dargestellt. Die Bewegung der physikalischen Drehachse in Richtung der Pfeile 402 und 403 erfolgt durch einen Kreuztisch, der Teil eines Koordinatenmessgerätes ist, in welchem die Anordnung eingebracht ist, auf der Kreisbahn 412.

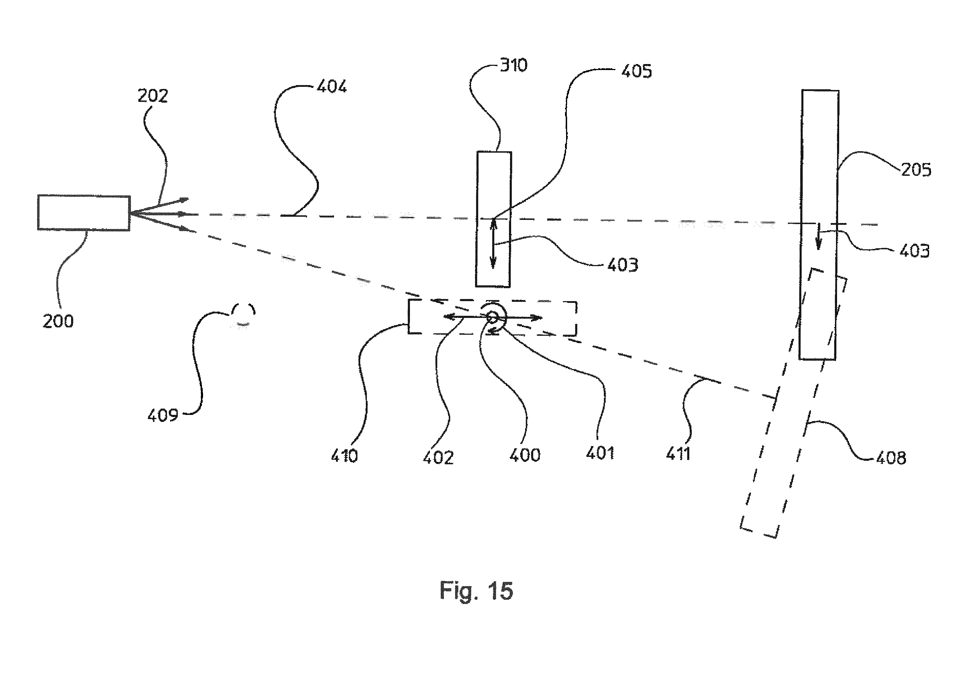

In Figur 15 wird die physikalische Drehachse 400 nun nur noch in Richtung des Pfeils 402 verfahren, während gleichzeitig der Detektor 205 in Richtung des Pfeils 403 bewegt und vorzugsweise zusätzlich um eine Achse parallel zur physikalischen Drehachse 400 gekippt wird. Dabei schneidet wiederum die virtuelle Drehachse 405 die mittlere Strahlachse 404. Für die 90°-Stellung beispielhaft ist die veränderte Position der Drehachse 409, des Werkstücks 410 und des Detektors 408 dargestellt. Die virtuelle Drehachse befindet sich nun an der Startposition der physikalischen Drehachse 400 und schneidet wiederum die nun mit dem Detektor 205 wandernde, also verdrehte mittlere Strahlachse 411. Im weiteren Verlauf der Drehung der physikalischen Drehachse 400 bewegt sich die virtuelle Drehachse 405 in Richtung des Pfeils 403.

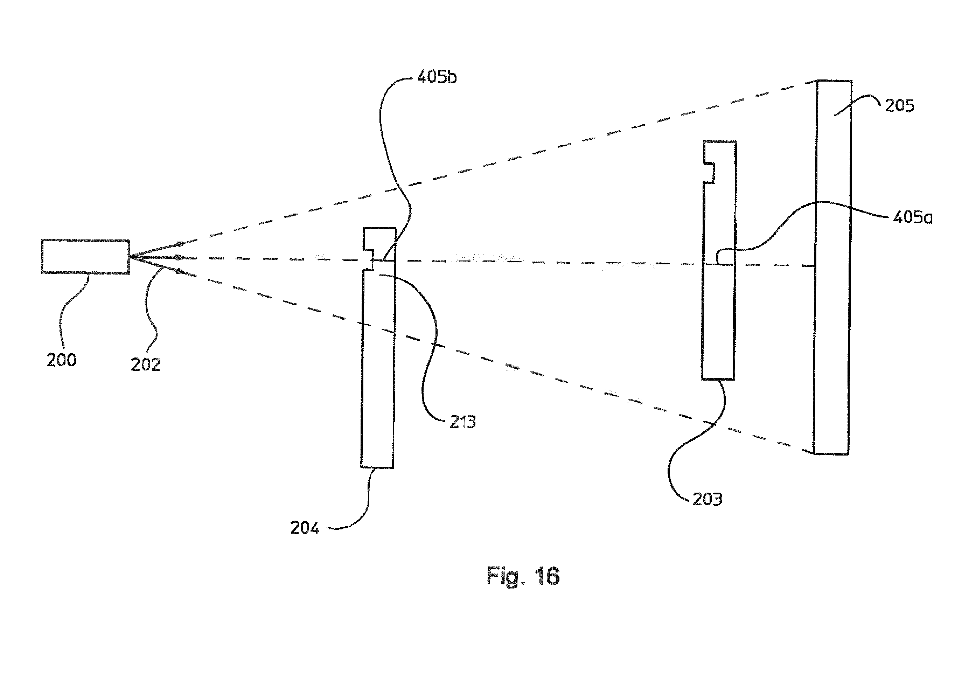

Figur 16 zeigt das Werkstück 203 in einer ersten Position zur Erfassung der kompletten Geometrie und in einer zweiten Stellung 204 zur hoch aufgelösten Bestimmung eines Details 213 in hoher Vergrößerung. In der ersten Position erfolgt dabei die Drehung des Werkstücks 203 um die virtuelle Drehachse 405a (in der Zeichnung um eine die Zeichenebene senkrecht schneidende Achse) und das Werkstück wird in allen Drehstellungen vollständig auf dem Detektor 205 abgebildet. In der zweiten Position erfolgt die Drehung des Werkstücks 204 um die virtuelle Drehachse 405b (in der Zeichnung um eine die Zeichenebene senkrecht schneidende Achse). In dieser Stellung verlässt das Teil in zumindest einigen Drehstellungen den durch die Röntgenstrahlquelle 200 gebildeten Strahlbereich 202 in der Zeichenebene oder zumindest einer Ebene, die senkrecht von der virtuellen Drehachse 405b durchstoßen wird. Das Werkstück wird dadurch nicht in allen Drehstellungen vollständig auf dem Detektor 205 abgebildet. Die somit fehlenden Durchstrahlungswerte auf dem Detektor 205 werden dann aus der Messung in der ersten Position des Werkstücks 203 durch Resampling-Verfahren unter Zuhilfenahme von Interpolationsverfahren und/oder Extrapolationsverfahren ermittelt.

Die Ergebnisse beider computertomographischer Messungen werden im Anschluss zusammenfassend ausgewertet, indem die rekonstruierten Grauwerte auf ein gemeinsames dreidimensionales Raster mit Hilfe z. B. von Resampling-Verfahren unter Zuhilfenahme von Interpolationsverfahren umgerechnet werden.

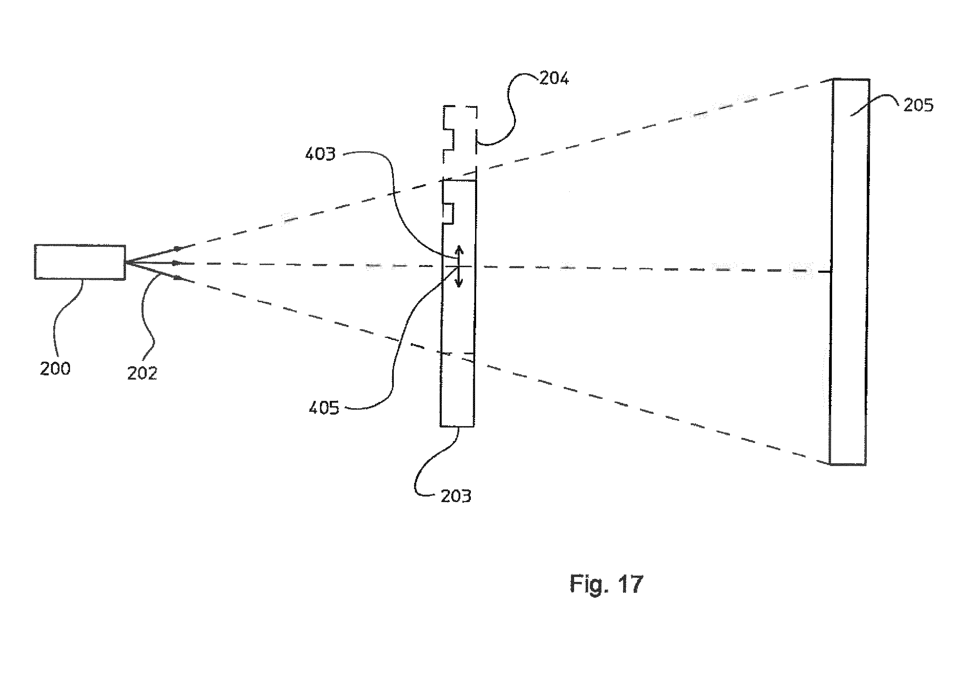

Figur 17 zeigt die gleiche Verfahrensweise wie Figur 16, wobei nun jedoch in annährend gleicher Vergrößerung aufgenommene sich teilweise überlappende Bereiche des Werkstücks 203 vereint werden, das in den Stellungen 203 und 204 nacheinander gemessen wird. Damit kann das Werkstück 203 vollständig erfasst werden, obwohl es größer als der Messbereich ist, der durch den Detektor 205 gebildet wird. Die virtuelle Drehachse 405 dreht sich dabei entweder um eine die Zeichenebene senkrecht schneidende Achse oder um den Pfeil 405 (in der Zeichnung vertikal verlaufend).

## Patentansprüche

1. Verfahren zur Korrektur von Projektionsdaten für eine CT-Rekonstruktion, wobei bei einer Messung ein zu messendes Werkstück zwischen einer Röntgenstrahlung emittierenden Röntgenquelle und einem die Röntgenstrahlung empfangenden Röntgendetektor angeordnet wird,
**dadurch gekennzeichnet,**
**dass** während des Messablaufes auftretende Relativ-Bewegungen zwischen der Röntgenquelle und dem Röntgendetektor durch vorab gewonnene Informationen korrigiert werden.

2. Verfahren nach Anspruch 1,
**dadurch gekennzeichnet,**
**dass** als Vorab-Informationen ein Durchstrahlungsbild des zu messenden Werkstücks oder mehrere Durchstrahlungsbilder des zu messenden Werkstücks in verschiedenen Drehstellungen und/oder verschiedenen Positionen bezüglich der Röntgenquelle und/oder des Röntgendetektors aufgenommen werden.

3. Verfahren nach Anspruch 1 oder 2,
**dadurch gekennzeichnet,**
**dass** die Anzahl der vorab aufgenommenen Durchstrahlungsbilder deutlich geringer ist, typischerweise 20 bis 70, als die Anzahl der zur Messung benötigten Durchstrahlungsbilder, typischerweise100 bis 1.600.

4. Verfahren nach zumindest einem der vorherigen Ansprüche,
**dadurch gekennzeichnet,**
**dass** die Korrektur anhand des einen vorab aufgenommen Durchstrahlungsbildes erfolgt, indem an einem oder mehreren beliebig während des Messablaufes wählbaren Zeitpunkten eine erneute Messung des zu messenden Werkstücks in der Drehstellung und Position erfolgt, in der die Vorab-Aufnahme ermittelt wurde.

5. Verfahren nach zumindest einem der vorherigen Ansprüche,
**dadurch gekennzeichnet,**
**dass** die Ermittlung der Korrekturdaten für die einzelnen zur Messung verwendeten Durchstrahlungsbilder durch Vergleich, zum Beispiel mit Hilfe von Korrelationsmethoden, mit den vorab aufgenommenen Durchstrahlungsbildern, und auf dem Vergleich basierender Verschiebung und/oder Skalierung, vorzugsweise durch Re-Sampling-Verfahren, der einzelnen zur Messung verwendeten Durchstrahlungsbilder, Teilen dieser Durchstrahlungsbilder oder einem oder mehreren Merkmalen innerhalb dieser Durchstrahlungsbilder erfolgt.

6. Verfahren nach zumindest einem der vorherigen Ansprüche,
**dadurch gekennzeichnet,**
**dass** Durchstrahlungsbilder, für die kein Vorab-Durchstrahlungsbild in der gleichen Drehstellung des Werkstückes vorliegt, dadurch korrigiert werden, dass die Informationen aus Vorab-Durchstrahlungsbildern verwendet werden, welche in benachbarten Drehstellungen aufgenommen wurden, vorzugsweise durch den Einsatz von Interpolations-Verfahren.

7. Verfahren nach zumindest einem der vorherigen Ansprüche,
**dadurch gekennzeichnet,**
**dass** die auf dem Vergleich der vorab bestimmten Durchstrahlungsbilder und der zur Messung verwendeten Durchstrahlungsbilder basierende Verschiebung und/oder Skalierung verwendet wird, um die relative Position zwischen der Röntgenquelle und/oder dem Röntgendetektor und/oder dem Werkstück während des Messlaufes durch Positionieren zu korrigieren.

8. Verfahren nach zumindest einem der vorherigen Ansprüche,
**dadurch gekennzeichnet,**
**dass** das Verfahren für ein CT-Messsystem eingesetzt wird, das Teil eines Koordinatenmessgerätes ist.
